(19) Europäisches Patentamt
European Patent Office
Office européen des brevets

(11) **EP 4 252 417 B1**

(12) # FASCICULE DE BREVET EUROPEEN

(45) Date de publication et mention
de la délivrance du brevet:
**01.01.2025 Bulletin 2025/01**

(21) Numéro de dépôt: **20811014.8**

(22) Date de dépôt: **26.11.2020**

(51) Classification Internationale des Brevets (IPC):
***H04N 13/156*** *(2018.01)* ***H04N 13/344*** *(2018.01)*

(52) Classification Coopérative des Brevets (CPC):
**H04N 13/156; H04N 13/344;** H04N 13/261

(86) Numéro de dépôt international:
**PCT/EP2020/083548**

(87) Numéro de publication internationale:
**WO 2021/110538 (10.06.2021 Gazette 2021/23)**

(54) **JUMELLES DE VISEE DE SIMULATION, ET SYSTEME ET PROCEDES DE SIMULATION**

SIMULATIONSBINOKULARE UND SIMULATIONSSYSTEM UND VERFAHREN

SIMULATION BINOCULARS, AND SIMULATION SYSTEM AND METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2019 FR 1913797**

(43) Date de publication de la demande:
**04.10.2023 Bulletin 2023/40**

(73) Titulaire: **Airbus Defence and Space SAS
31400 Toulouse (FR)**

(72) Inventeurs:
• **BIRAN, Hervé**
**78990 ELANCOURT Cedex (FR)**
• **LARTILLOT, Christophe**
**78990 ELANCOURT Cedex (FR)**

(74) Mandataire: **Cabinet Le Guen Maillet
3, impasse de la Vigie
CS 71840
35418 Saint-Malo Cedex (FR)**

(56) Documents cités:
**ES-A1- 2 300 204 ES-B1- 2 300 204
US-A1- 2013 050 432**

**Description**

DOMAINE TECHNIQUE

La présente invention concerne la simulation sur terrain réel de situations militaires virtuelles grâce à des lunettes de visée en réalité mixte.

ETAT DE LA TECHNIQUE ANTERIEURE

Les procédures d'appui feu (« Call For Fire » en anglais) sont des opérations militaires permettant un usage précis de la puissance de feu, dans des délais rapides et en synchronisation avec les équipes au sol, pour appuyer les troupes proches de l'ennemi et éviter les tirs fratricides. Au cours de ces opérations, des officiers des forces armées, déployés sur le théâtre d'opération, sont chargés de coordonner tout type de frappe, par exemple des frappes aériennes, en fournissant, entre autres, des informations sur une cible à atteindre, sur sa position et sur son environnement immédiat. On parle alors de contrôleurs aériens avancés FAC (« Forward Air Controller » en anglais) pour une ancienne terminologie OTAN (« Organisation du Traité de l'Atlantique Nord ») désignant exclusivement les appuis feu aériens, d'observateurs d'artillerie JFO (« Joint Fires Observer » en anglais) pour la coordination des feux d'artillerie, ou de contrôleurs JTAC (« Joint Terminal Attack Controller » en anglais) selon la terminologie américaine et la nouvelle terminologie OTAN, capables de coordonner tout type d'appui feu aérien, terrestre ou naval. Par la suite du document, on parlera de contrôleur d'appui feu (ou « Fire Support Controller » en anglais) pour désigner indifféremment un contrôleur aérien avancé FAC, un observateur d'artillerie JFO ou un contrôleur JTAC.

Pour permettre d'entraîner des contrôleurs d'appui feu sans risques, des systèmes de reconstitution, par environnement virtuel, de cadres opérationnels de champ de bataille ont été développés. On peut par exemple citer le système décrit dans le document de brevet FR 3 007 161 A1.

Ce sont des systèmes de simulation qui sont installés en intérieur dans des infrastructures dédiées. Ces systèmes de simulation nécessitent en effet des équipements informatiques conséquents pour générer et afficher des scènes virtuelles. Leur affichage requiert aussi typiquement de grands écrans. Ces systèmes de simulation ne permettent alors pas aux contrôleurs d'appui feu de s'entraîner dans des conditions réelles de luminosité, de météorologie et de configuration de terrain. D'autres systèmes de réalité augmentée sont décrits dans US 2013/050432 A1 et ES 2 300 204 B1.

Il est souhaitable de pallier totalement ou partiellement l'inconvénient de l'art antérieur mentionné ci-dessus. Il existe donc un besoin pour une solution visant à fournir un environnement de simulation qui permet aux contrôleurs d'appui feu de s'entraîner dans des conditions plus réalistes. Il existe aussi un besoin pour une solution dont la portabilité rend possible un déploiement aisé et rapide pour prendre en compte la configuration d'un nouveau terrain d'entraînement. Il existe aussi un besoin de fournir une solution permettant d'effectuer un entraînement réaliste en mode d'interaction et de collaboration entre différents acteurs, comme par exemple pour des scénarii d'entraînement d'appui feu. Il existe aussi un besoin pour une solution qui permette de maintenir ce réalisme dans des conditions de zoom.

EXPOSE DE L'INVENTION

A cet effet, il est proposé des jumelles de visée de simulation comportant une caméra, un écran, une paire de lentilles agencées pour faire face à l'écran, et de la circuiterie électronique configurée pour : obtenir une trame vidéo de la caméra, la trame vidéo étant destinée à être affichée par les jumelles de visée de simulation dans une fenêtre de projection E3 ; obtenir des informations de géolocalisation des jumelles de visée de simulation et des informations d'orientation de la caméra ; transmettre les informations de géolocalisation et d'orientation à une plateforme de simulation ; recevoir des éléments graphiques de simulation et des informations de positionnement dans l'espace d'objets virtuels en trois dimensions correspondant aux éléments graphiques de simulation ; effectuer un rendu en deux dimensions des objets virtuels en fonction des informations de positionnement, afin d'afficher les objets virtuels dans une fenêtre de projection E2, et lorsqu'un facteur de grossissement est à appliquer, maintenir fixes les dimensions de la fenêtre de projection E2 et ajuster le champ de vision du rendu en deux dimensions selon le facteur de grossissement ; superposer, dans une scène virtuelle locale aux jumelles de visée de simulation, le rendu en deux dimensions des objets virtuels dans la fenêtre de projection E2 et les trames vidéo dans la fenêtre de projection E3, la fenêtre de projection E3 étant placée dans un plan plus éloigné des jumelles de visée de simulation que celui où est placée la fenêtre de projection E2 dans le champ de vision des jumelles de visée de simulation, les jumelles de visée de simulation ayant un axe de visée qui passe par le centre des fenêtres de projection E2 et E3, et lorsqu'un facteur de grossissement est à appliquer, ajuster les dimensions de la fenêtre de projection E3 selon le facteur de grossissement ; obtenir une image stéréoscopique de réalité mixte à partir de la superposition des plans à l'aide d'une paire de caméras virtuelles reproduisant une vision binoculaire adaptée à la paire de lentilles ; et effectuer, sur l'écran, un affichage oeil droit et oeil gauche de l'image stéréoscopique de réalité mixte obtenue. Ainsi, grâce à la scène réelle capturée par la caméra, les contrôleurs d'appui feu sont immergés dans un environnement de simulation plus réaliste. Grâce au traitement avantageux des champs de vision et des fenêtres de projection en cas de facteur de grossissement à appliquer, le réalisme d'immersion est conservé en cas de zoom. Et le déport du traitement des éléments graphiques (relatifs aux objets virtuels liés au scénario d'entraînement) dans la plateforme de simulation permet de limiter les besoins en ressources de traitement en interne des jumelles de visée de simulation, ce qui facilite l'intégration des jumelles de visée de simulation et leur adaptabilité à de nouveaux terrains d'entraînement.

Selon un mode de réalisation particulier, la circuiterie électronique est configurée pour superposer en outre, dans la scène virtuelle locale aux jumelles de visée de simulation, un réticule dans une fenêtre de projection E1 placée dans un plan plus rapproché des jumelles de visée de simulation que celui où est placée la fenêtre de projection E2 dans le champ de vision des jumelles de visée de simulation, l'axe de visée passant aussi par le centre de la fenêtre de projection E1, et lorsqu'un facteur de grossissement est à appliquer, ajuster les dimensions de la fenêtre de projection E1 selon le facteur de grossissement. Ainsi, le réalisme des jumelles de visée de simulation est renforcé.

Selon un mode de réalisation particulier, la circuiterie électronique est configurée pour superposer en outre, dans la scène virtuelle locale aux jumelles de visée de simulation, des informations complémentaires dans une fenêtre de projection E0 placée dans un plan plus rapproché des jumelles de visée de simulation que celui où est placée la fenêtre de projection E1 dans le champ de vision des jumelles de visée de simulation, la fenêtre de projection E0 étant insensible au facteur de grossissement. Ainsi, les jumelles de visée de simulation peuvent afficher des informations conformes à des afficheurs électroniques de jumelle de visée réelles, avec un effet stéréoscopique réaliste, indépendamment de tout facteur de grossissement éventuellement appliqué.

Selon un mode de réalisation particulier, l'écran, la caméra et la circuiterie électronique sont fournis par un téléphone portable intelligent assemblé à un boîtier comportant la paire de lentilles, qui sont agencées pour faire face à l'écran du téléphone portable intelligent. Ainsi, le déploiement de l'équipement nécessaire à la simulation est aisé.

Selon un mode de réalisation particulier, les jumelles de visée de simulation comportent en outre un capteur de type unité de mesure inertielle, et la circuiterie électronique implémente un algorithme de Localisation et Cartographie Simultanées SLAM (« Simultaneous Localization And Mapping » en anglais), et les informations d'orientation de la caméra sont fournies par l'algorithme de Localisation et Cartographie Simultanées SLAM, sauf lorsque l'algorithme de Localisation et Cartographie Simultanées SLAM décroche, auquel cas les informations d'orientation de la caméra sont fournies par le capteur de type unité de mesure inertielle. Ainsi, les jumelles de visée utilisent les informations d'orientation de l'algorithme SLAM, considérées comme plus précises, dès que possible, et utilisent les informations d'orientation du capteur de type unité de mesure inertielle, en mode dégradé.

Selon un mode de réalisation particulier, les informations de géolocalisation des jumelles de visée de simulation sont fournies par l'algorithme de Localisation et Cartographie Simultanées SLAM, sauf lorsque l'algorithme de Localisation et Cartographie Simultanées SLAM décroche, auquel cas les informations de géolocalisation des jumelles de visée de simulation sont fournies par un récepteur GPS (« Global Positioning System » en anglais) intégré aux jumelles de visée de simulation. Ainsi, les jumelles de visée utilisent les informations de géolocalisation de l'algorithme SLAM, considérées comme plus précises, dès que possible, et utilisent les informations de géolocalisation du récepteur GPS, en mode dégradé.

Selon un mode de réalisation particulier, l'algorithme de Localisation et Cartographie Simultanées SLAM fournit un indice de confiance associé aux informations d'orientation de la caméra, pour chaque trame vidéo capturée par la caméra, et la circuiterie électronique est configurée pour déterminer si l'algorithme de Localisation et Cartographie Simultanées SLAM a décroché selon la valeur de l'indice de confiance. Ainsi, il est aisé de savoir si les informations fournies par l'algorithme SLAM sont fiables ou pas.

Selon un mode de réalisation particulier, lorsque l'algorithme de Localisation et Cartographie Simultanées SLAM a décroché, la circuiterie électronique corrige les informations d'orientation actualisées du capteur de type unité de mesures inertielles IMU de la façon suivante :

$$Q_{abs}(t) = Q_{abs}(t0) * Q_{imu}^{-1}(t0) * Q_{imu}(t)$$

où :

- $Q_{abs}(t)$ représente les informations d'orientation corrigées ;
- $Q_{abs}(t0)$ représente les informations d'orientation absolues, c'est-à-dire celles issues de l'algorithme SLAM, avant décrochage ;
- $Q_{imu}(t)$ représente les informations d'orientation actualisées du capteur de type unité de mesures inertielles IMU ; et
- $Q_{imu}(t0)$ représente les informations d'orientation du capteur de type unité de mesures inertielles IMU avant décrochage de l'algorithme SLAM. Ainsi, le mode dégradé susmentionné est aisément mis en place.

Selon un mode de réalisation particulier, la circuiterie électronique corrige les informations d'orientation fournies par l'algorithme de Localisation et Cartographie Simultanées SLAM selon des écarts déterminés lors d'opérations de calibration. Ainsi, il est possible de recevoir des informations de l'algorithme SLAM de manière relative.

Selon un mode de réalisation particulier, la circuiterie électronique est configurée pour, lors des opérations de calibration : recevoir des éléments graphiques de simulation correspondant à un objet virtuel de calibration et des informations de positionnement dans l'espace de l'objet virtuel de calibration ; effectuer, sur l'écran, un affichage stéréoscopique oeil droit et oeil gauche d'une image stéréoscopique de réalité mixte incluant l'objet virtuel de calibration ; obtenir des premières informations d'orientation de la caméra lorsqu'un premier appui sur un bouton de calibration des jumelles de visée de simulation est effectué ; obtenir des secondes informations d'orientation de la caméra lorsqu'un second appui sur le bouton de calibration des jumelles de visée de simulation est effectué ; et comparer les premières informations d'orientation et les secondes informations d'orientation et en déduire des écarts d'informations d'orientation et d'altitude correspondants. Ainsi, les opérations de calibration sont aisément réalisées.

Il est aussi proposé un système de simulation comportant une plateforme de simulation, ainsi que des jumelles de visée de simulation selon l'une quelconque des modes de réalisation présentés ci-dessus, la plateforme de simulation comportant de la circuiterie électronique configurée pour placer, selon un scénario d'entraînement, des objets virtuels dans un modèle numérique de terrain modélisant un terrain d'entraînement où les jumelles de visée de simulation sont destinées à être utilisées, et pour transmettre ou faire transmettre aux jumelles de visée de simulation les éléments graphiques de simulation selon les informations de géolocalisation des jumelles de visée de simulation et les informations d'orientation de caméra qui sont transmises par les jumelles de visée de simulation. Ainsi, le déport du traitement des éléments graphiques (relatifs aux objets virtuels et au modèle numérique de terrain liés au scénario d'entraînement) dans la plateforme de simulation permet de limiter les besoins en ressources de traitement en interne des jumelles de visée de simulation, ce qui facilite l'intégration des jumelles de visée de simulation et leur adaptabilité à de nouveaux terrains d'entraînement.

Selon un mode de réalisation particulier, la plateforme de simulation transmet ou fait transmettre aux jumelles de visée de simulation les éléments graphiques de simulation de manière asynchrone par rapport aux informations de géolocalisation des jumelles de visée de simulation et aux informations d'orientation de caméra, les jumelles de visée de simulation effectuent des interpolations de positionnement des objets virtuels et une première unité de traitement du système de simulation qui est déportée par rapport aux jumelles de visée de simulation effectue, pour le compte des jumelles de visée de simulation, un recalage de positionnement grâce au modèle numérique de terrain. Ainsi, le déport des traitements liés au recalage de positionnement grâce au modèle numérique de terrain, potentiellement coûteux en termes de ressources de traitement, permet de limiter les besoins en ressources de traitement en interne des jumelles de visée de simulation.

Selon un mode de réalisation particulier, lorsque les jumelles de visée de simulation activent une lecture de télémétrie, une seconde unité de traitement du système de simulation qui est déportée par rapport aux jumelles de visée de simulation effectue un calcul de distance par rapport à une cible visée par les jumelles de visée de simulation en utilisant une méthode de tracé de rayon dans une scène virtuelle incluant lesdits objets virtuels et le modèle numérique de terrain. A noter que la seconde unité de traitement peut aussi être la première unité de traitement. Ainsi, le déport des traitements liés à la lecture de télémétrie, potentiellement coûteux en termes de ressources de traitement, permet de limiter les besoins en ressources de traitement en interne des jumelles de visée de simulation.

Il est aussi proposé un procédé de simulation, implémenté par une circuiterie électronique de jumelles de visée de simulation comportant en outre une caméra, un écran et une paire de lentilles agencées pour faire face à l'écran, le procédé comportant les étapes suivantes : obtenir une trame vidéo de la caméra, la trame vidéo étant destinée à être affichée par les jumelles de visée de simulation dans une fenêtre de projection E3 ; obtenir des informations de géolocalisation des jumelles de visée de simulation et des informations d'orientation de la caméra ;

- transmettre les informations de géolocalisation et d'orientation à une plateforme de simulation ; recevoir des éléments graphiques de simulation et des informations de positionnement dans l'espace d'objets virtuels en trois dimensions correspondant aux éléments graphiques de simulation ; effectuer un rendu en deux dimensions des objets virtuels en fonction des informations de positionnement, afin d'afficher les objets virtuels dans une fenêtre de projection E2, et lorsqu'un facteur de grossissement est à appliquer, maintenir fixes les dimensions de la fenêtre de projection E2 et ajuster le champ de vision du rendu en deux dimensions selon le facteur de grossissement ; superposer, dans une scène virtuelle locale aux jumelles de visée de simulation, le rendu en deux dimensions des objets virtuels dans la fenêtre de projection E2 et les trames vidéo dans la fenêtre de projection E3, la fenêtre de projection E3 étant placée dans un plan plus éloigné des jumelles de visée de simulation que celui où est placée la fenêtre de projection E2 dans le champ de vision des jumelles de visée de simulation, les jumelles de visée de simulation ayant un axe de visée qui passe par le centre des fenêtres de projection E2 et E3, et lorsqu'un facteur de grossissement est à appliquer, ajuster les dimensions de la fenêtre de projection E3 selon le facteur de grossissement ; obtenir une image stéréoscopique de réalité mixte à partir de la superposition des plans à l'aide d'une paire de caméras virtuelles reproduisant une vision binoculaire adaptée à la paire de lentilles ; et effectuer, sur l'écran, un affichage oeil droit et oeil gauche de l'image stéréoscopique de réalité mixte obtenue.

Il est aussi proposé un produit programme d'ordinateur, comportant des instructions entraînant l'exécution, par un processeur, du procédé mentionné ci-dessus, dans l'un quelconque de ses modes de réalisation, lorsque lesdites instructions sont exécutées par le processeur. Il est aussi proposé un support de stockage d'informations sur lequel est stocké un tel produit programme d'ordinateur.

Il est aussi proposé un procédé de simulation, implémenté par un système de simulation incluant des jumelles de visée de simulation implémentant le procédé de simulation défini ci-dessus dans l'un quelconque de ses modes de réalisation et une plateforme de simulation comportant de la circuiterie électronique implémentant les étapes suivantes : placer, selon un scénario d'entraînement, des objets virtuels dans un modèle numérique de terrain en trois dimensions modélisant un terrain d'entraînement où les jumelles de visée de simulation sont utilisées, et transmettre ou faire transmettre aux jumelles de visée de simulation des éléments graphiques correspondant aux objets virtuels selon les informations de géolocalisation des jumelles de visée de simulation et les informations d'orientation de leur caméra qui sont transmises par les jumelles de visée de simulation.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un système de simulation d'entraînement sur le terrain destiné à des contrôleurs d'appui feu ;
[Fig. 2A] illustre schématiquement un boîtier de jumelles de visée du système de simulation de la Fig. 1 ;
[Fig. 2B] illustre schématiquement un couplage entre le boîtier de jumelles de visée de la Fig. 2A et un téléphone portable intelligent, afin de constituer des jumelles de visée ;
[Fig. 2C] illustre schématiquement le boîtier de jumelles de visée et le téléphone portable intelligent après réalisation du couplage selon la Fig. 2B ;
[Fig. 2D] illustre schématiquement la définition des angles d'Euler par rapport aux jumelles de visée ;
[Fig. 3] illustre schématiquement un exemple d'architecture matérielle d'au moins un dispositif du système de simulation de la Fig. 1 ;
[Fig. 4] illustre schématiquement un algorithme de gestion d'affichage via les jumelles de visée ;
[Fig. 5] illustre schématiquement un algorithme d'obtention d'informations d'orientation utilisées dans la gestion d'affichage via les jumelles de visée ;

[Fig. 6] illustre schématiquement des décalages à prendre en considération pour une calibration de l'affichage via les jumelles de visée ;
[Fig. 7] illustre schématiquement un algorithme de calibration de l'affichage via les jumelles de visée ;
[Fig. 8A] illustre schématiquement un agencement de fenêtres de projection pour constituer des trames vidéo de réalité mixte, sans facteur de grossissement ; et
[Fig. 8B] illustre schématiquement un agencement de fenêtres de projection pour constituer des trames vidéo de réalité mixte, avec facteur de grossissement.

EXPOSE DETAILLE DE MODES DE REALISATION

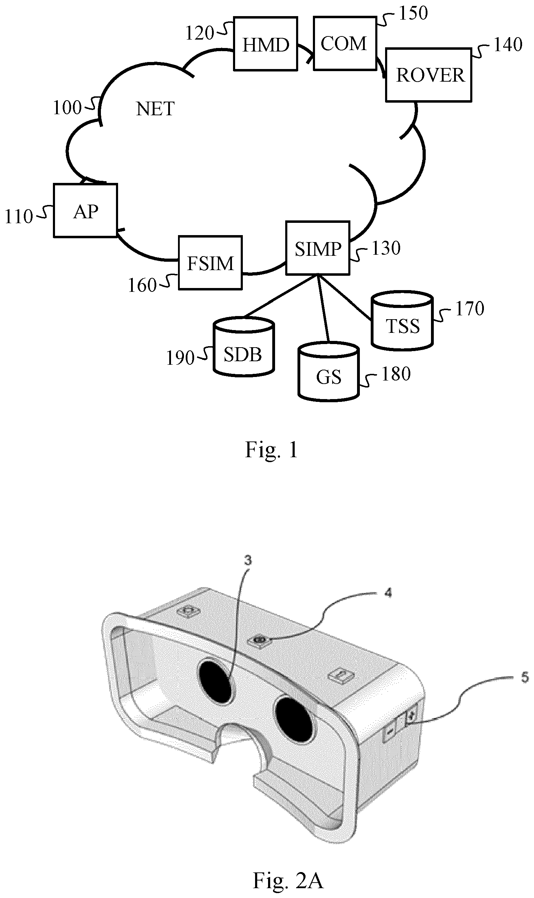

La Fig. 1 illustre schématiquement un système de simulation d'entraînement sur le terrain destiné à des combattants. Dans un mode de réalisation, le système de simulation permet d'effectuer un entraînement sur le terrain de combattants et de différents intervenants interarmes et interarmées d'un combat, afin de les entraîner, directement sur le terrain, à requérir et à contrôler des appuis feux de différentes armées.

Le système de simulation comporte des jumelles de visée, sous la forme d'un visiocasque binoculaire HMD (« Head Mounted Display » en anglais) 120. Les jumelles de visée HMD 120 simulent préférentiellement des modèles de jumelles de visée tels qu'utilisés par les forces armées. Les jumelles de visée HMD 120 sont un équipement de réalité mixte qui permet à un contrôleur d'appui feu en simulation, appelé « entraîné principal », d'interagir avec des acteurs virtuels sur le terrain réel. Le système de simulation immerge l'entraîné principal dans un scénario d'entraînement, en superposant une scène virtuelle sur des images vidéo captées par une caméra (« video caméra » en anglais) des jumelles de visée HMD 120. Le système de simulation peut comporter une pluralité de telles jumelles de visée, de sorte à équiper un coéquipier et/ou un superviseur, afin de leur permettre de s'immerger dans la simulation indépendamment de l'entraîné principal.

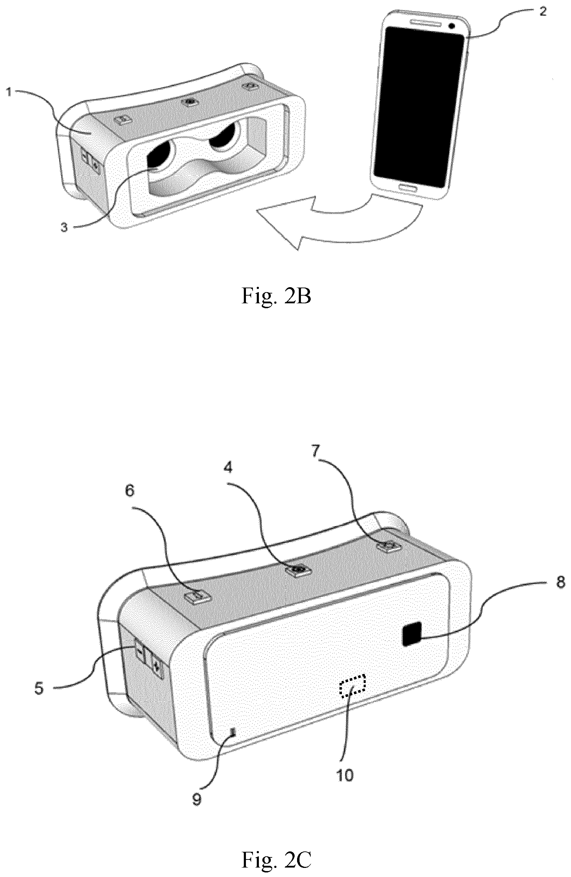

Tel que détaillé ci-après en relation avec les Figs. 2A, 2B et 2C, les jumelles de visée HMD 120 comportent préférentiellement un boîtier de jumelles de visée 1 couplé avec un téléphone portable intelligent (« smartphone » en anglais) 2.

Le système de simulation comporte en outre préférentiellement un simulateur de tir FSIM (« fire simulator » en anglais) 160. Le simulateur de tir FSIM 160 permet de préparer, piloter et déclencher une simulation de tir selon un contexte opérationnel simulé : par exemple, un simulateur de tir air-sol dans le cadre d'un exercice d'appui feu aérien, un simulateur de tir sol-sol dans le cadre d'un exercice d'appui feu d'infanterie, un simulateur de tir mer-sol dans le cadre d'un exercice d'appui feu provenant de plateformes maritimes, etc. Le simulateur de tir FSIM 160 permet de prendre le contrôle, par exemple grâce à un joystick, d'un véhicule simulé en charge d'une frappe vers une cible (avion de combat, hélicoptère de combat, drone, artillerie, bâtiment de la marine). Il s'agit d'un poste autonome de simulation dans lequel une vue géographique simulée du terrain d'entraînement en 3D (trois dimensions) est affichée. Le simulateur de tir FSIM 160 est préférentiellement installé sur un ordinateur portable (« laptop » en anglais).

Le système de simulation comporte en outre une plateforme de simulation SIMP (« simulation platform » en anglais) 130. La plateforme de simulation SIMP 130 est connectée à un serveur de situation tactique TSS (« tactical situation server » en anglais) 170, à un serveur géographique GS (« geographical server » en anglais) 180 et à une base de données de simulation SDB (« simulation data base » en anglais) 190. Le serveur de situation tactique TSS 170 et/ou le serveur géographique GS 180 et/ou la base de données de simulation SDB 190 peuvent être connectés au système de simulation ou intégrés au système de simulation, par exemple au sein de la plateforme de simulation SIMP 130.

Le système de simulation comporte préférentiellement en outre un simulateur de système de type ROVER (« Remotely Operated Video Enhanced Receiver » en anglais) 140, à savoir un ensemble au moins formé d'un simulateur de capteur électro-optique et d'un simulateur de réception à distance de flux vidéo provenant de ces capteurs. Les systèmes de type ROVER sont typiquement utilisés en situation de combat pour recevoir au sol une vue embarquée, en temps réel (avec un léger décalage temporel), depuis un avion ou un drone en opération, de sorte à faciliter l'exécution des tâches qui incombent aux contrôleurs d'appui feu sur le terrain. Dans un exercice d'entraînement aux demandes d'appui feu, un observateur en charge d'effectuer un guidage de frappe vers une cible, tel que le font en combat les contrôleurs d'appui feu, dispose généralement d'un retour vidéo simulé d'un système d'arme utilisé dans le scénario d'entraînement et piloté par le biais du simulateur de tir FSIM 160. Le simulateur de système de type ROVER fournit ainsi un affichage de flux vidéo d'une simulation de vue prise depuis le système d'arme en question. Cette simulation de vue s'appuie sur une modélisation de terrain en 3D, utilisant un modèle numérique de terrain qui est ensuite texturé à partir d'imagerie satellite, une modélisation de conditions météo et un rendu en 3D de la cible. Le simulateur de système de type ROVER est par exemple intégré à une tablette, un téléphone portable intelligent (« smartphone » en anglais) ou un ordinateur portable, le flux vidéo simulé étant alors préférentiellement affiché via une application dédiée ou via une page HTML (« HyperText Markup Language » en anglais) dans un navigateur (« browser » en anglais).

La plateforme de simulation SIMP 130 est configurée pour créer un environnement de simulation 3D (en trois dimensions) comprenant une virtualisation 3D du terrain de la zone d'entraînement, une virtualisation de systèmes d'armes mis en oeuvre dans le simulateur de tir FSIM 160 et de leurs cinématiques associées, une virtualisation de cibles à atteindre et de leurs cinématiques associées, et des cinématiques de projectiles vers ces cibles. La plateforme de simulation SIMP 130 est configurée pour exécuter un scénario d'entraînement comportant des définitions de différents évènements à appliquer dans la simulation et à générer un rendu d'au moins une vue utilisée par le simulateur de tir FSIM 160, un rendu d'au moins une vue de retour vidéo pour le simulateur de système de type ROVER 140, et la fourniture de différents éléments de simulation, tels que décrits ci-après, pour permettre une représentation en réalité mixte dans les jumelles de visée HMD 120. Différentes scènes virtuelles, synchronisées entre elles, existent alors dans le système de simulation, comme décrit par la suite.

La plateforme de simulation SIMP 130 peut comporter un éditeur de scénario d'entraînement. L'éditeur de scénario d'entraînement est configuré pour fournir une interface de configuration de différents paramètres et entités de la simulation, tels que : une liste d'acteurs réels (entraîneur, superviseur, etc.), une liste d'entités synthétiques (systèmes d'arme, force de frappe et opérateur du simulateur de tir, poste de commandement, etc.), une délimitation géographique de la zone d'entraînement (théâtre des opérations), une situation initiale (position des entités synthétiques, date et heure), une liste de jalons datés pour chaque entité synthétique intervenant dans la simulation. Le scénario d'entraînement est ensuite utilisé comme référence lors de la conduite de la simulation, puis de l'analyse de son déroulement. La plateforme de simulation SIMP 130 peut comporter un enregistreur de scénario d'entraînement, permettant d'enregistrer en base de données le scénario d'entraînement ainsi édité. La plateforme de simulation SIMP 130 peut aussi obtenir le scénario d'entraînement à appliquer dans la base de données de simulation SDB 190, destinée à fournir des jeux de scénarii d'entraînement applicables en accord avec le terrain où la simulation est pratiquée.

Le système de simulation peut en outre comporter un terminal de communication COM 150, afin d'augmenter le réalisme de la simulation en plaçant le contrôleur d'appui feu encore au plus près de ses conditions réelles de terrain. Dans ce cas, le simulateur de tir FSIM 160 est préférentiellement aussi équipé d'un tel terminal de communication, comportant par exemple un casque audio et un microphone voix, afin de permettre à un opérateur du simulateur de tir FSIM 160 d'échanger vocalement avec l'entraîné principal pour recevoir des informations de guidage en temps réel. Le terminal de communication COM 150 peut aussi permettre à l'entraîné principal d'échanger vocalement avec tout autre observateur ou acteur du scénario d'entraînement aussi équipé d'un tel terminal de communication. Le terminal de communication COM 150 utilise préférentiellement une technologie de type VoIP (« Voice over IP » en anglais). Le terminal de communication COM 150 peut en outre inclure des moyens de communication de messagerie tactique (SICS, L16, VMF par exemple). Dans un mode de réalisation particulier, le terminal de communication COM 150 est intégré au téléphone portable intelligent 2 qui est utilisé pour réaliser en partie les jumelles de visée HMD 120, en y branchant par exemple un casque audio et un microphone voix. Le terminal de communication COM 150 peut en variante être intégré au simulateur de système de type ROVER.

Le système de simulation comporte en outre un bus de communication, ou un réseau de communication NET 100, permettant de mettre en relation l'ensemble des éléments susmentionnés du système de simulation. Par exemple, le réseau de communication NET 100 est conforme à tout ou partie de la famille de standards IEEE 802.11 et un point d'accès AP (« access point » en anglais) 110 gère la mise en place du réseau de communication NET 100. Le point d'accès AP 110 peut intégrer une fonction de routeur ou de pont, par exemple avec un réseau cellulaire de type LTE (« Long-Term Evolution » en anglais), afin de déporter des éléments du système de simulation, comme par exemple le simulateur de tir FSIM 160, ou faire intervenir des systèmes et/ou simulateurs distants complémentaires pouvant prendre part au scénario d'entraînement (poste de commandement, bases de données, etc.).

Le serveur géographique GS 180 fournit au système de simulation un modèle numérique de terrain, en 3D, préférentiellement texturé avec des images satellites ou aériennes pour un rendu en 3D réaliste de la zone d'entraînement. La texture sert à augmenter le réalisme de la simulation pour le simulateur de tir FSIM 160 et pour le simulateur de système de type ROVER. Le serveur géographique GS 180 fournit des informations d'inter-visibilité et de distance des entités synthétiques dans la scène virtuelle (e.g., présence d'éléments de terrain masquant une entité synthétique par rapport à un point d'observation). Le serveur géographique GS 180 fournit des données météorologiques utilisées pour des modélisations de systèmes d'armes : influence pour les trajectoires de projectiles de la température ambiante, de la pression atmosphérique, de l'humidité de l'air, des conditions de visibilité, d'éventuelles précipitations (pluie, neige), de la force et de la direction du vent, etc.

Le serveur de situation tactique TSS 170 fournit au système de simulation des éléments de la simulation utiles pour représenter dans la scène virtuelle des systèmes d'arme, des cibles et des objets intervenant dans le scénario d'entraînement, ainsi que leur comportement au cours de l'exercice (cinématique, etc.).

La plateforme de simulation SMIP 130 peut servir de relais, avec éventuellement reformatage de données, entre le serveur de situation tactique TSS 170 et/ou le serveur géographique GS 180, d'un côté, et aux autres éléments du système de simulation qui ont besoin de recevoir de leurs données, de l'autre côté. La plateforme de simulation SMIP 130 peut aussi programmer le serveur de situation tactique TSS 170 et/ou le serveur géographique GS 180 pour transmettre ces données au reste du système de simulation. La transmission des données issues du serveur de situation tactique TSS 170 et/ou du serveur géographique GS 180 peut par exemple être réalisée grâce à tout ou partie de la famille de standards IEEE 1278 relative au protocole DIS (« Distributed Interactive Simulation » en anglais).

La Fig. 2A illustre schématiquement un mode de réalisation d'un boîtier 1 des jumelles de visée HMD 120. Le boîtier 1 des jumelles de visée HMD 120 comporte un logement destiné à recevoir et à maintenir fixe un téléphone portable intelligent 2. Le boîtier 1 des jumelles de visée HMD 120 comporte une paire de lentilles 3 agencées pour faire face à l'écran du téléphone portable intelligent 2 lorsque ce dernier est fixé sur le boîtier 1 des jumelles de visée HMD 120. L'entraîné principal est supposé placer ses yeux de l'autre côté des lentilles 3, de sorte à avoir une vision binoculaire sur l'écran du téléphone portable intelligent 2 au travers des lentilles 3.

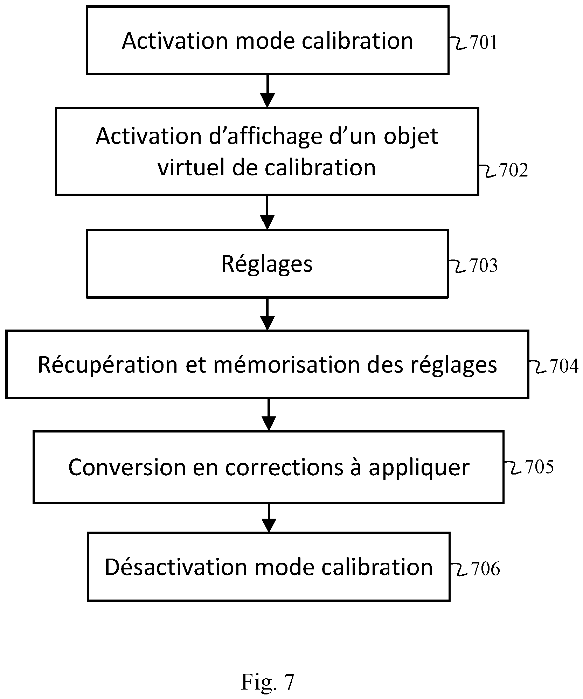

Le boîtier 1 des jumelles de visée HMD 120 comporte préférentiellement un bouton 4 d'activation d'un mode de calibration des jumelles de visée HMD 120. Par exemple, l'entraîné principal active le mode de calibration par un appui sur le bouton 4. Des réalisations particulières du mode de calibration sont décrites ci-après en relation avec la Fig. 7.

Le boîtier 1 des jumelles de visée HMD 120 comporte un organe de commande de réglage de facteur de grossissement, tel qu'une paire de boutons 5. Par appui sur un premier bouton de la paire de boutons 5, l'entraîné principal commande un zoom avant, et par appui sur le second bouton de la paire de boutons 5, l'entraîné principal commande un zoom arrière. La paire de boutons 5 peut être remplacée par une molette électromécanique, un zoom avant étant commandé par action de la molette électromécanique dans un sens de rotation ou un zoom arrière étant commandé par action de la molette électromécanique dans le sens inverse de rotation.

Le boîtier 1 des jumelles de visée HMD 120 comporte préférentiellement un bouton 6 de déclenchement de lecture de télémétrie. La lecture de télémétrie est déclenchée par appui sur le bouton 6, et la lecture de télémétrie est stoppée par appui subséquent sur le bouton 6 et/ou après expiration d'un délai prédéfini. En variante, la lecture de télémétrie est maintenue tant que l'appui sur le bouton 6 est maintenu. La lecture de télémétrie consiste à afficher dans les jumelles de visée HMD 120 une information de distance qui sépare la position de l'entraîné de celle d'une cible pointée (qui peut être une cible virtuelle, ou un autre objet virtuel, ou un élément de terrain) par l'axe de visée des jumelles de visée HMD 120. Cette distance est mesurée à l'aide d'une méthode dite de tracé de rayon dans une scène virtuelle synchronisée avec la scène réelle. La scène virtuelle utilisée pour le calcul de télémétrie, appelée scène virtuelle détaillée, est distincte de la scène virtuelle utilisée pour le rendu des objets en réalité mixte dans les jumelles de visée HMD 120 et comprend une représentation en 3D du terrain, les objets du scénario (cible, forces en présence, etc.) et des objets représentatifs du sur-sol (arbre, bâti, infrastructure, etc.). Les méthodes de tracé de rayon sont bien connues de l'état de l'art et font partie des fonctionnalités standard proposées par les moteurs de rendu 3D du commerce. Dans le cadre de la présente description, la mesure de distance est déterminée par un tracé de rayon dans la direction de visée des jumelles de visée HMD 120, à savoir selon l'axe passant par la position de l'observateur et le centre du champ de vision FOV des jumelles de visée HMD 120. Plus le modèle numérique de la modélisation de terrain est précis, plus la mesure de distance pour la lecture de télémétrie est précise. Plus la scène virtuelle utilisée est complète en termes de virtualisation d'objets présents dans la scène réelle (sur-sol), plus les mesures de distance réalisées sont conformes à la réalité. La contrepartie à cette richesse et précision de la virtualisation du terrain d'entraînement et des objets qui le composent est le volume de calculs et l'occupation mémoire nécessaires pour effectuer le calcul d'une telle scène en 3D indispensable aux méthodes de tracé de rayon mises en oeuvre pour la mesure de distance. Le calcul de cette scène virtuelle en 3D est donc déporté hors des jumelles de visée HMD 120, de sorte que les jumelles de visée HMD 120 n'ont pas à recevoir, traiter et manipuler des données de la modélisation du terrain. Ainsi, lorsque la lecture de télémétrie est enclenchée, une requête de mesure de distance entre l'entraîné principal et une cible pointée, comprenant, entre autres, la géolocalisation des jumelles de visée HMD 120 et un vecteur de direction représentatif de la direction de visée (par exemple un vecteur), est transmise à une unité de traitement déportée, comme par exemple l'unité de traitement (processeur, mémoire, etc.) du simulateur de système de type ROVER ou la plateforme de simulation SIMP 130. L'unité de traitement déportée effectue la mesure par tracé de rayon dans la scène virtuelle détaillée, à l'aide de la géolocalisation des jumelles de visée HMD 120 et du vecteur de direction transmis dans la requête. Cette mesure est renvoyée aux jumelles de visée HMD 120 pour être ensuite préférentiellement affichée dans un plan représentant un réticule de visée selon des caractéristiques d'affichage du modèle de jumelles de visée simulées.

Selon un mode particulier de réalisation, la mesure de distance entre l'entraîné principal et une cible pointée est ensuite rafraîchie à une fréquence prédéfinie par l'unité de traitement déportée sans autre requête des jumelles de visée HMD 120, et la mesure de distance est obtenue et transmise par l'unité de traitement déportée aux jumelles de visée HMD 120 dès que la valeur de la mesure diffère de la précédente. Dans ce mode de réalisation particulier, les jumelles de visée HMD 120 informent l'unité de traitement déportée de tout changement de leur géolocalisation et/ou de leur orientation (i.e., de sa direction de visée), afin que l'unité de traitement déportée puisse en tenir compte pour calculer la distance requise. Ainsi, les jumelles de visée HMD 120 disposent d'une information de distance toujours à jour quels que soient les mouvements des jumelles de visée HMD 120 et la position de la cible pointée (en mouvement ou non), et prête à être affichée lorsque le mode de lecture de télémétrie est enclenché.

Le boîtier 1 des jumelles de visée HMD 120 comporte préférentiellement un bouton 7 de déclenchement de lecture de compas magnétique. Le boîtier 1 des jumelles de visée HMD 120 peut comporter des organes de commande, tels que des boutons ou molettes, complémentaires. Tout ou partie de la boutonnique d'un modèle de jumelles de visée simulé peut être ainsi reproduite.

Lorsque les jumelles de visée HMD 120 reposent sur une architecture utilisant le téléphone portable intelligent 2, les organes de commande du boîtier 1 sont connectés à un composant intégré de transmission sans-fil compatible avec une technologie radio implémentée par le téléphone portable intelligent 2, comme par exemple Bluetooth (marque déposée). La manipulation des organes de commande est alors transformée en messages de commande respectifs, transmis au téléphone portable intelligent 2 via le composant intégré de transmission sans-fil. En variante, le contrôle du téléphone portable intelligent 2 peut être effectué via une interface de connexion filaire, telle que par exemple une interface de connexion de type « Lightning » pour les téléphones portables intelligents iPhone (marque déposée) d'Apple (marque déposée).

La **Fig. 2B** illustre schématiquement que le boîtier 1 des jumelles de visée HMD 120 est adapté pour être mécaniquement couplé au téléphone portable intelligent 2. Le téléphone portable intelligent 2 comporte typiquement une caméra (« video caméra » en anglais) 8, un haut-parleur 9 et un ensemble de composants intégrés 10 incluant un capteur de type unité de mesures inertielles IMU (« Inertial Measurement Unit » en anglais) et préférentiellement un récepteur GPS (« Global Positioning System » en anglais). Lorsque les jumelles de visée HMD 120 n'ont pas besoin de téléphone portable intelligent pour fonctionner, la caméra 8 et l'ensemble de composants intégrés 10 incluant au minimum le capteur de type unité de mesures inertielles IMU sont directement incorporés au boîtier des jumelles de visée HMD 120, de même que l'écran.

La **Fig. 2C** illustre schématiquement le boîtier 1 des jumelles de visée HMD 120 et le téléphone portable intelligent 2 après couplage mécanique. Le couplage mécanique est tel que le téléphone portable intelligent 2 est solidaire du boîtier 1 des jumelles de visée HMD 120. Le couplage mécanique est tel que, lorsque l'entraîné principal place les jumelles de visée HMD 120, l'entraîné principal voit l'écran du téléphone portable intelligent 2 au travers des lentilles 3, la caméra 8 se trouvant alors du côté opposé des jumelles de visée HMD 120 de celui où est placé l'entraîné principal.

Les jumelles de visée HMD 120 sont configurées, grâce notamment à une configuration du téléphone portable intelligent 2 et à l'agencement du téléphone portable intelligent 2 avec le boîtier 1, pour reproduire un affichage de vision à travers (on parle de dispositif de type « video-see-through »). Pour ce faire, une librairie ARCore (marque déposée) de la société Google (marque déposée), ou une librairie ARKit (marque déposée) de la société Apple (marque déposée), peut être utilisée. Ainsi, lorsqu'il utilise les jumelles de visée HMD 120, l'entraîné principal voit à travers les lentilles 3, en réalité mixte, une vidéo temps-réel capturée par la caméra 8 enrichie par des objets virtuels. Afin de reproduire l'effet binoculaire de jumelles d'observation, le téléphone portable intelligent 2 est configuré pour afficher sur son écran la vidéo capturée sous la forme d'une vue oeil droit et d'une vue oeil gauche.

Ainsi, une cible virtuelle présente dans la scène virtuelle du scénario d'entraînement qui est placée dans le champ de vision de l'observateur défini par la caméra 8 du téléphone portable intelligent 2 est affichée en superposition de la vue réelle capturée par la caméra 8. Outre la scène virtuelle issue du scénario d'entraînement, l'affichage sur l'écran du téléphone portable intelligent 2 peut être enrichi d'informations supplémentaires (azimut, télémétrie, mire de visée, grossissement appliqué, etc.).

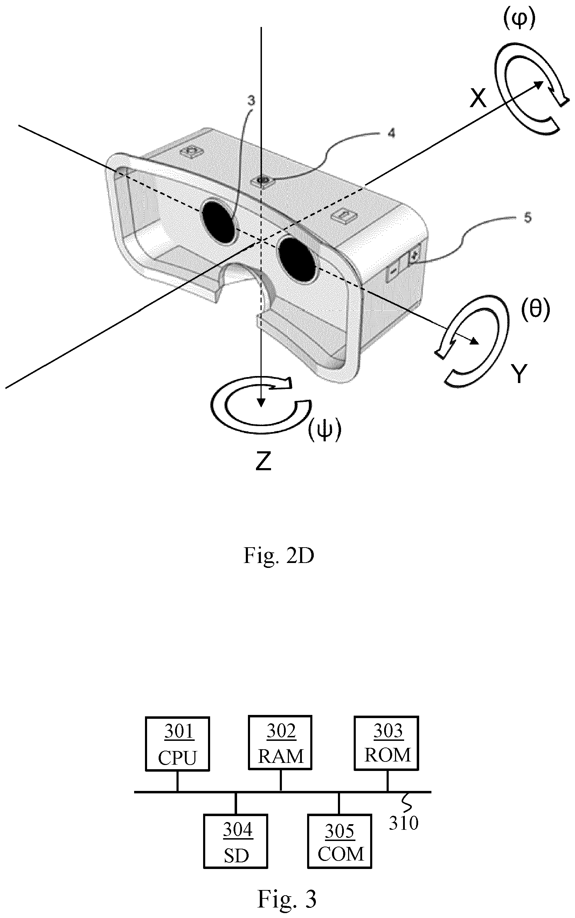

Pour repère, la **Fig. 2D** illustre schématiquement la définition des angles d'Euler par rapport aux jumelles de visée HMD 120, dans un repère orthonormé direct (X, Y, Z). Ces angles d'Euler servent typiquement d'informations d'orientation des jumelles de visée HMD 120, définissant ainsi un vecteur de direction de visée. Les angles d'Euler sont ainsi un angle d'inclinaison verticale ou de tangage $\theta$ (« pitch » en anglais) autour de l'axe Y, un angle d'orientation par rapport au Nord magnétique ou de lacet $\psi$ (« heading » en anglais) autour de l'axe Z, et un angle de roulis $\varphi$ (« roll » en anglais) autour de l'axe X.

La **Fig. 3** illustre schématiquement un exemple d'architecture matérielle d'un dispositif du système de simulation. L'exemple d'architecture matérielle est applicable à une unité de contrôle et de traitement des jumelles de visée HMD 120, notamment au téléphone portable intelligent utilisé pour en partie constituer les jumelles de visée HMD 120. L'exemple d'architecture matérielle est aussi applicable à une unité de contrôle et de traitement de la plateforme de simulation SIMP 130. L'exemple d'architecture matérielle est aussi applicable à une unité de contrôle et de traitement du simulateur de système de type ROVER 140. L'exemple d'architecture matérielle est aussi applicable à une unité de contrôle et de traitement du simulateur de tir FSIM 160. L'exemple d'architecture matérielle est aussi applicable à une unité de contrôle et de traitement du serveur de situation tactique TSS 170 et/ou du serveur géographique GS 180 et/ou de la base de données de simulation SDB 190. L'exemple d'architecture matérielle est aussi applicable à une unité de contrôle et de traitement du terminal de communication COM 150.

Le dispositif comporte alors, reliés par un bus de communication 210 : un ou plusieurs processeurs ou CPUs (« Central Processing Unit » en anglais) 301 ; une mémoire vive RAM (« Read-Only Memory » en anglais) 302 ; une mémoire morte ROM (« Read Only Memory » en anglais) 303, par exemple de type EEPROM (« Electrically-Erasable Programmable ROM » en anglais) ou une mémoire Flash ; une unité de stockage 304, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces de communication COM 305.

Le gestionnaire d'interfaces de communication COM 305 permet au dispositif de communiquer avec les autres dispositifs du système de communication, plus particulièrement via le réseau de communication NET 100.

Le processeur 301 est capable d'exécuter des instructions chargées dans la mémoire vive RAM 302 à partir de la mémoire morte ROM 303, d'une mémoire externe, d'un support de stockage (tel qu'une carte SD), ou d'un réseau de communication (potentiellement distinct du réseau de communication NET 100). Lorsque le dispositif est mis sous tension, le processeur 301 est capable de lire de la mémoire vive RAM 302 des instructions et de les exécuter. Ces instructions forment un programme d'ordinateur causant l'implémentation, par le processeur 301, de tout ou partie des étapes, fonctionnements et comportements décrits ici en relation avec le dispositif en question.

Tout ou partie des étapes, fonctionnements et comportements décrits ici en relation avec le dispositif en question peut ainsi être implémenté sous forme logicielle par exécution d'un ensemble d'instructions par une machine programmable, par exemple un processeur de type DSP (« Digital Signal Processor » en langue anglo-saxonne) ou un microprocesseur, ou être implémenté sous forme matérielle par une machine ou un composant dédié, par exemple un composant FPGA (« Field Programmable Gate Array » en anglais) ou ASIC (« Application Specific Integrated Circuit » en anglais). D'une manière générale, le dispositif en question comporte de la circuiterie électronique adaptée et configurée pour implémenter, sous forme logicielle et/ou matérielle, les étapes, fonctionnements et comportements décrits ici en relation avec le dispositif en question.

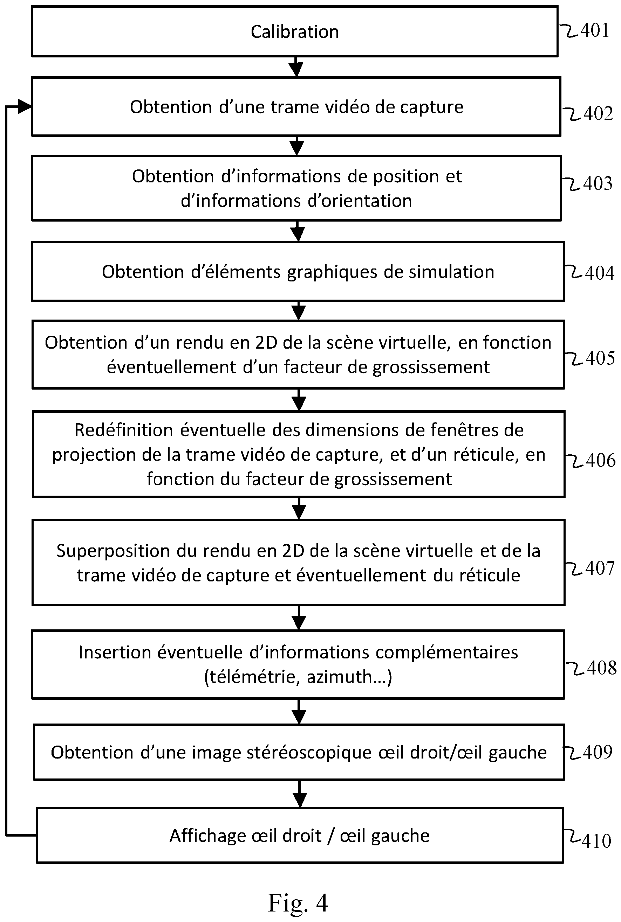

La **Fig. 4** illustre schématiquement un algorithme de gestion d'affichage via les jumelles de visée HMD 120.

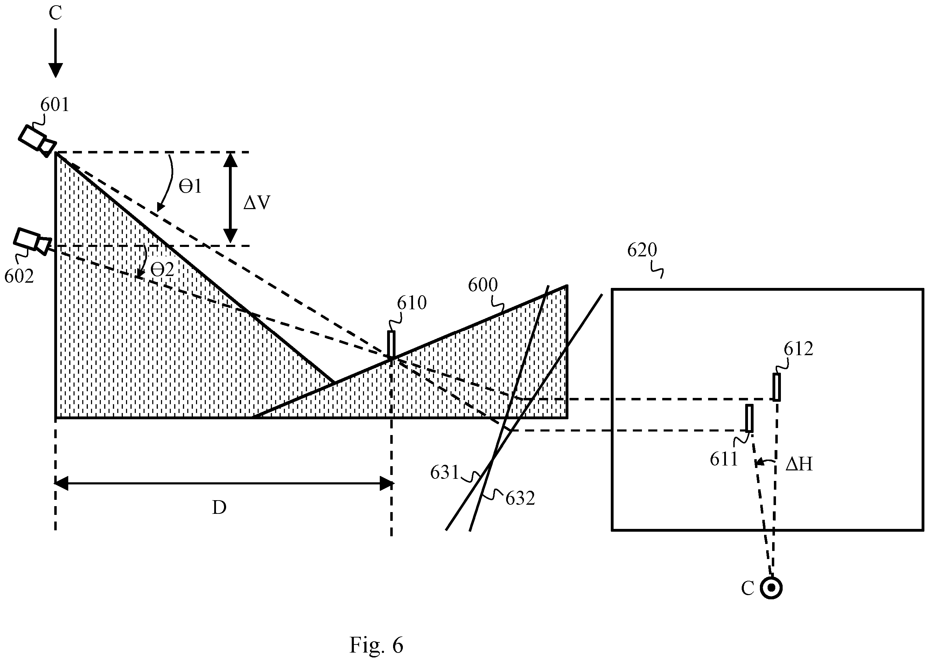

Dans une étape 401, des opérations de calibration sont préférentiellement effectuées. La calibration comporte des opérations permettant d'obtenir et de corriger un écart latéral (« heading déviation » en anglais) ΔH, un écart d'inclinaison (« pitch déviation » en anglais) Δθ et un écart vertical (« vertical déviation » en anglais) ΔV entre la vue réelle du terrain telle que capturée par la caméra 8 et la modélisation du terrain utilisée par la plateforme de simulation SIMP 130 pour créer la scène virtuelle. Les écarts ΔH et ΔV sont représentés sur la Fig. 6. L'écart Δθ correspond à la différence entre les angles d'inclinaison θ1 et θ2 sur la Fig. 6. Cet écart Δθ est déterminé lors des opérations de calibration pour estimer l'écart vertical ΔV.

Les valeurs des écarts en question peuvent être obtenues par configuration préalable. Les valeurs des écarts en question sont préférentiellement obtenues grâce à des opérations de calibration sur le terrain, comme notamment décrit ci-après en relation avec la Fig. 7.

Dans une étape 402, les jumelles de visée HMD 120 obtiennent une trame vidéo de capture en temps-réel. Plus particulièrement, le téléphone portable intelligent 2 reçoit une trame vidéo de capture générée par la caméra 8. Chaque trame vidéo fournie par la caméra 8 est préférentiellement accompagnée de métadonnées de suivi géographique 6-DoF (« 6 Degrees of Freedom » en anglais, ou 6 degrés de liberté en français). Pour une application avantageuse d'un facteur de grossissement par les jumelles de visée HMD 120, les trames vidéo sont capturées dans le champ de vision FOV (« Field of View » en anglais) natif de la caméra 8, c'est-à-dire sans application de facteur de grossissement par la caméra 8. La majorité des téléphones portables intelligents du marché disposent d'une caméra, telle que la caméra 8, ayant un champ de vision FOV entre 65° et 80° et un ratio dimension horizontale sur dimension verticale de la prise de vue de 4/3.

Dans une étape 403, les jumelles de visée HMD 120 obtiennent en temps-réel des informations de géolocalisation et des informations d'orientation dans l'espace des jumelles de visée HMD 120. Pour les informations d'orientation, les jumelles de visée HMD 120 implémentent un algorithme SLAM (« Simultaneous Localization And Mapping » en anglais, soit « Localisation et Cartographie Simultanées » en français). De nombreux algorithmes SLAM sont connus, par exemple basés sur un filtre de Kalman étendu ou sur un filtre particulaire (« particle filter » en anglais, aussi connu sous le nom de méthode de Monte-Carlo séquentielle), et équipent aujourd'hui la majorité des téléphones portables intelligents commercialement disponibles. Pour les informations de géolocalisation, les jumelles de visée HMD 120 utilisent aussi préférentiellement l'algorithme SLAM. En variante, les jumelles de visée HMD 120 utilisent le récepteur GPS. L'algorithme SLAM permet toutefois d'obtenir des informations de position géographique (informations de translation dans le cas d'indications de position fournies de manière relative) plus précises que le récepteur GPS. Le récepteur GPS est dans ce cas utilisé uniquement pour déterminer la position initiale de l'algorithme SLAM, ou en cas de décrochage temporaire du SLAM. Ainsi, les jumelles de visée HMD 120 peuvent utiliser le récepteur GPS en mode dégradé, lorsque l'algorithme SLAM a décroché.

L'algorithme SLAM détermine les informations d'orientation, typiquement les angles d'Euler, et les informations de position, typiquement les informations de translation, par reconnaissance d'objets situés dans le champ de vision de la caméra 8, à la fréquence de rafraîchissement de la caméra 8 (par exemple, 30 ou 60Hz). Les informations d'orientation et de position fournies par l'algorithme SLAM ne subissent aucune dérive. Toutefois, la précision de l'algorithme SLAM est tributaire des objets situés dans le champ de vision de la caméra 8. Lorsque la scène filmée ne présente pas suffisamment d'objets exploitables, l'algorithme SLAM ne fonctionne pas correctement. Ainsi, si l'entraîné principal regarde le ciel et non le terrain devant lui, l'algorithme SLAM peut ne pas disposer de suffisamment de repères physiques et décroche. Cette situation peut aussi par exemple survenir lorsque la capture d'une vidéo du terrain offre peu de relief ou de contraste, notamment en conditions hivernales avec présence de neige ou de brume, ou, à l'inverse, en conditions de saturation du capteur vidéo en cas de réfraction du soleil sur sol mouillé par exemple.

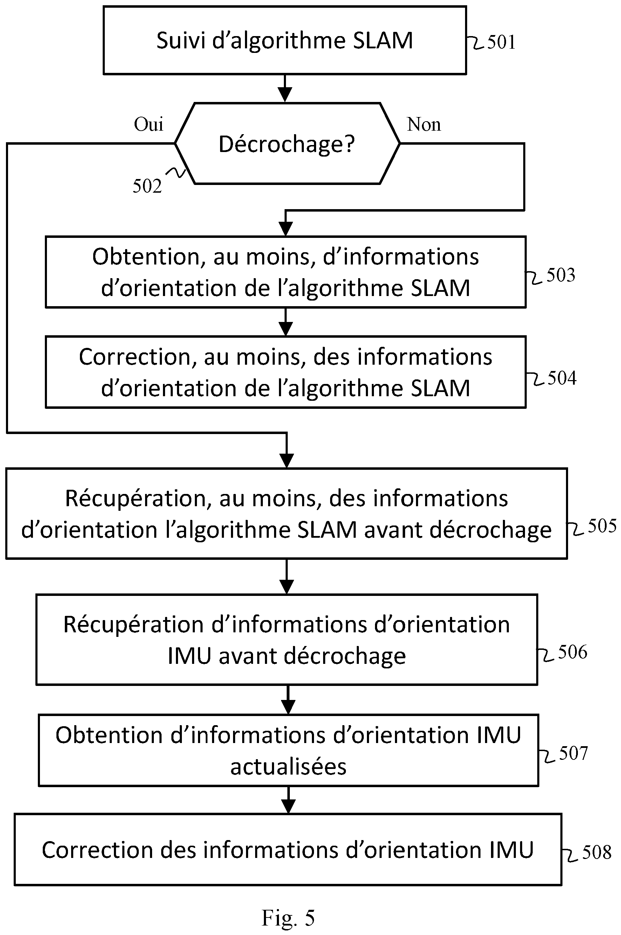

Comme détaillé ci-après en relation avec la Fig. 5, lorsque l'algorithme SLAM est opérationnel, les jumelles de visée HMD 120 utilisent les informations d'orientation, typiquement les angles d'Euler, ainsi que préférentiellement les informations de position, typiquement les informations de translation, fournies par l'algorithme SLAM. Et lorsque l'algorithme SLAM décroche, les jumelles de visée HMD 120 utilisent les informations d'orientation, typiquement les angles d'Euler, fournies par le capteur de type unité de mesures inertielles IMU équipant les jumelles de visée HMD 120 (équipant plus particulièrement le téléphone portable intelligent 2) et préférentiellement des informations de position issues de mesures de géolocalisation fournies par le récepteur GPS. Préférentiellement, les jumelles de visée HMD 120 utilisent la dernière position absolue connue avant décrochage, tant que l'algorithme SLAM est inopérant. Lorsque les jumelles de visée HMD 120 utilisent les informations d'orientation fournies par le capteur de type unité de mesures inertielles IMU, les jumelles de visée HMD 120 les corrigent en compensant une différence de mesure entre les informations d'orientation fournies par le capteur de type unité de mesures inertielles IMU et les informations d'orientation fournies par l'algorithme SLAM au moment du décrochage de l'algorithme SLAM. Les jumelles de visée HMD 120 corrigent en outre les informations d'orientation utilisées, quand elles proviennent de l'algorithme SLAM, en accord avec les écarts révélés par les opérations de calibration. Ainsi, l'entraîné principal peut suivre un avion virtualisé dans le ciel dans le cadre du scénario d'entraînement, sans perdre l'orientation de la caméra malgré le décrochage de l'algorithme SLAM.

Dans une étape 404, les jumelles de visée HMD 120 obtiennent en temps réel des éléments graphiques de simulation relatifs à des objets virtuels du scénario d'entraînement, c'est-à-dire des éléments relatifs à des objets de scène virtuelle à afficher en réalité mixte. Les éléments graphiques de simulation sont fournis aux jumelles de visée HMD 120 par le serveur de situation tactique TSS 170, préférentiellement via la plateforme de simulation SIMP 130. Les éléments graphiques de simulation peuvent être les objets graphiques eux-mêmes, en trois dimensions. Cependant, en considérant que les jumelles de visée HMD 120 peuvent disposer en interne d'une librairie d'objets graphiques préalablement installée et configurée, les éléments graphiques de simulation fournis par le serveur de situation tactique TSS 170 sont alors des indications de types d'objets graphiques dans la scène virtuelle et de leurs cinématiques. Les éléments graphiques de simulation sont par exemple fournis grâce au protocole DIS. Au lieu de recevoir la scène virtuelle complète incorporant la modélisation de terrain, les jumelles de visée HMD 120 ne reçoivent que des informations relatives aux objets virtuels du scénario (c'est-à-dire sans le modèle en 3D du terrain d'entraînement et préférentiellement sans le modèle en 3D des objets). Le traitement à effectuer par les jumelles de visée HMD 120 pour réaliser l'affichage en réalité mixte est ainsi réduit, ce qui facilite une superposition synchronisée en temps réel de la scène virtuelle sur la scène réelle dans les jumelles de visée HMD 120. Cette approche est particulièrement bien adaptée à un affichage en réalité mixte réalisé grâce à un téléphone portable intelligent (qui dispose typiquement de performances de traitement bien moindres qu'un ordinateur ou un serveur), en respectant le débit de trames vidéo imposé par la capture de trames vidéo par la caméra 8.

Ainsi, la plateforme de simulation SIMP 130 utilise la modélisation de terrain en 3D pour définir les éléments de scénario dans le champ de vision FOV applicable (objets virtuels qui ne sont pas cachés par le relief du terrain, cinématique, etc.), mais seuls les éléments de scénario visibles dans le champ de vision FOV à l'exception de la représentation du terrain sont transmis aux jumelles de visée HMD 120. De sorte que la plateforme de simulation SIMP 130 puisse connaître le champ de vision FOV applicable, les jumelles de visée HMD 120 transmettent, à la même fréquence que la capture vidéo de la caméra 8 (e.g. 30 ou 60 Hz), les informations de géolocalisation fournies par l'algorithme SLAM ou le récepteur GPS, et les informations d'orientation issues de l'étape 403. La plateforme de simulation SIMP 130 est capable de déterminer l'altitude à appliquer pour la détermination du champ de vision FOV, grâce à la géolocalisation des jumelles de visée HMD 120 et à des informations d'élévation du modèle numérique de terrain, corrigées par les opérations de calibration, ainsi que préférentiellement les informations de position (e.g., translation) fournies par l'algorithme SLAM (permettant ainsi par exemple de détecter un passage de l'entraîné principal de la position « accroupi » à la position « debout »). Les jumelles de visée HMD 120 obtiennent, au même rythme, les objets virtuels au même rythme, de manière à pouvoir réaliser un rafraîchissement des objets virtuels qui soit synchronisé avec celui des images capturées par la caméra 8. Les jumelles de visée HMD 120 peuvent recevoir les éléments graphiques de simulation relatifs aux objets virtuels à afficher à un rythme plus faible, et les jumelles de visée HMD 120 effectuent alors des opérations d'interpolation afin de pouvoir réaliser un rafraîchissement des objets virtuels qui soit synchronisé avec celui des images capturées par la caméra 8. Ainsi, une synchronisation parfaite de la scène réelle et de la scène virtuelle peut être obtenue en réalité mixte dans les jumelles de visée HMD 120 à la fréquence de la capture vidéo de la caméra (30 ou 60Hz).

Les jumelles de visée HMD 120 peuvent recevoir des éléments graphiques de simulation en réponse à chaque envoi des informations de géolocalisation et des informations d'orientation, selon un mécanisme de requête-réponse. Une approche préférentielle consiste toutefois à transmettre les éléments graphiques de simulation de manière asynchrone par rapport aux envois des informations de géolocalisation et des informations d'orientation. Un recalage des éléments graphiques de simulation (ou des objets virtuels correspondant) est alors préférable, pour éviter que ceux-ci donnent une impression de « flotter » en réalité mixte. Ainsi, dans un mode particulier de réalisation, les éléments graphiques de simulation obtenus à l'étape 404 sont, préalablement à leur affichage par les jumelles de visée HMD 120, recalés sur la modélisation de terrain. Ce recalage consiste à calculer l'altitude sur la modélisation de terrain de l'objet virtuel en question, à sa position géographique courante. En effet, les scénarios d'entraînement utilisent des trajectoires d'objets mobiles définies par une position de départ, une position d'arrivée et des éventuelles positions intermédiaires, ainsi qu'une vitesse de déplacement et une direction de déplacement. A partir de ces informations, un moteur de simulation anime l'objet virtuel en question, pour qu'il se déplace le long de sa trajectoire, selon la direction et la vitesse de déplacement données. Entre deux positions connues du scénario, le moteur de simulation interpole les positions de l'objet virtuel de manière à coller le plus possible à la trajectoire prédéfinie dans le scénario d'entraînement. Cette interpolation ne tient pas compte de la réalité terrain sous-jacent. Un décalage entre l'altitude interpolée et l'altitude de la modélisation de terrain sous l'objet virtuel peut exister. Il convient de corriger ce décalage pour éviter qu'il ne se répercute sur la représentation de l'objet mobile dans la scène virtuelle des jumelles de visée HMD 120 et entraîne des effets de sauts de l'objet virtuel au moment du rendu de la scène virtuelle dans les jumelles de visée HMD 120. Dans un mode de réalisation particulier, le recalage de l'altitude de chaque objet virtuel sur le modèle numérique de terrain est demandé par le moteur de simulation à chaque changement de position dudit objet virtuel dans le scénario, par une lecture dans le modèle numérique de terrain disponible sur le serveur géographique GS 180 de la valeur d'altitude à la position de l'objet virtuel considéré.

Dans un autre mode de réalisation, la valeur d'altitude est extraite de la scène virtuelle détaillée générée par l'entité de traitement déportée déjà mentionnée. Cette scène virtuelle enrichie, utilisée aussi pour le calcul des informations de télémétrie de la jumelle de visée, consiste notamment en une représentation en 3D de la modélisation de terrain la plus précise disponible sur la zone géographique d'entraînement. La valeur d'altitude du terrain à la position de l'objet virtuel considéré peut donc aussi être obtenue par un calcul de distance verticale séparant la base de l'objet virtuel et le terrain sous-jacent.

Quels que soient les deux modes de réalisation particuliers précédemment cités, le recalage des éléments graphiques de simulation (ou objets virtuels) sur le modèle numérique de terrain peut utiliser également une information représentative de la pente du terrain à la position de l'objet virtuel, pour recaler l'orientation dudit objet virtuel dans la scène. En effet, l'objet virtuel en mouvement sur sa trajectoire, selon les paramètres donnés par le scénario d'entraînement, peut se retrouver sur un changement de pente du terrain. Dans cette configuration, le recalage de l'altitude peut ne pas suffire pour effectuer correctement le recalage sur le terrain. Il est alors nécessaire d'ajuster aussi son orientation par rapport à la pente de terrain. Cet ajustement consiste à ajuster l'orientation de l'objet virtuel considéré par rapport à la pente de terrain représentée par exemple par un vecteur correspondant à la normale à la pente de terrain à la position géographique considérée. Pour ce recalage de l'orientation de l'objet virtuel en question, la normale à la pente de terrain peut être obtenue par calcul depuis les informations d'altitude extraites de la modélisation de terrain au voisinage de la position géographique considérée, ou par un calcul de moyenne des normales des faces du terrain en 3D situées au voisinage de la position géographique considérée dans la scène virtuelle détaillée.

Dans un mode de réalisation particulier, les éléments graphiques de simulation sont accompagnés d'éléments audio de simulation, de manière à accroître le réalisme d'effets de cinématique (explosion d'une cible virtuelle, bruit d'un véhicule en approche, etc.). Ces éléments audio de simulation sont destinés à être joués par les jumelles de visée HMD 120, par le biais du haut-parleur 9, de manière synchrone avec les éléments graphiques de simulation qu'ils accompagnent.

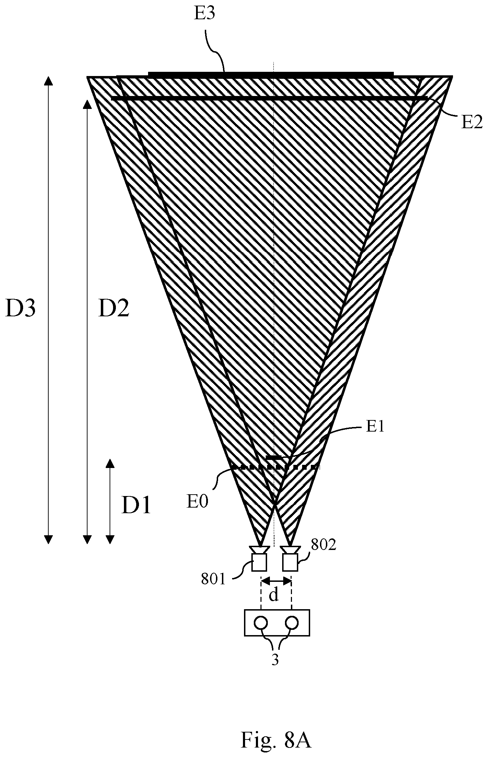

Dans une étape 405, les jumelles de visée HMD 120 effectuent un rendu en 2D (projection) des objets virtuels en 3D (i.e., les éléments de la scène virtuelle) dont les éléments graphiques correspondants ont été reçus à l'étape 404. Par exemple, les jumelles de visée HMD 120, et plus particulièrement le téléphone portable intelligent 2, utilisent pour ce faire le moteur de simulation Unity (marque déposée) développé par la société Unity Technologies. Le rendu en 2D est destiné à être affiché dans une fenêtre de projection (« viewport » en anglais) E2 (voir Fig. 8A). Le fond du rendu en 2D est transparent. La taille de la fenêtre de projection E2 est fixe, avec une résolution d'image constante, même quand un facteur de grossissement (zoom) doit être appliqué. Lorsqu'un facteur de grossissement est à appliquer, les jumelles de visée HMD 120 reçoivent les éléments graphiques de simulation des objets virtuels à afficher selon un champ de vision FOV qui est ajusté selon le facteur de grossissement (dimension horizontale et dimension verticale du champ de vision FOV de la caméra virtuelle utilisée par les jumelles de visée HMD 120 divisées par « 2 » lorsque le facteur de grossissement est de « 2 » (zoom x2)). Ainsi, la tailles des objets virtuels à représenter dans le champ de vision FOV ajusté sont de dimensions deux fois plus grandes que leurs dimensions sans facteur de grossissement dans la fenêtre de projection E2. De sorte que la plateforme de simulation SIMP 130 ait connaissance de l'ajustement selon le facteur de grossissement à appliquer au champ de vision FOV applicable, lorsque l'entraîné principal commande un zoom avant ou un zoom arrière sur les jumelles de visée HMD 120 (e.g., respectivement par appui sur un bouton ZOOM+ ou un ZOOM-), les jumelles de visée HMD 120 en informent au moins la plateforme de simulation SIMP 130. Ainsi, la plateforme de simulation SIMP 130 ajuste les dimensions du champ de vision FOV de la caméra virtuelle en conséquence. Par exemple, sans facteur de grossissement, le champ de vision FOV de la caméra virtuelle est égal à 110° en vertical et autant en horizontal. Cette valeur de champ de vision FOV et ce ratio 1/1 entre sa valeur horizontale et verticale sont contraints par le dispositif binoculaire (cf. lentilles 3) utilisé dans les jumelles de visée HMD 120, ce dernier reproduisant le champ de vision stéréoscopique binoculaire chez l'être humain. Le champ de vision FOV de la caméra virtuelle et par construction la fenêtre de projection E2 sont ainsi de forme carrée, facilitant l'affichage d'une image stéréoscopique oeil droit / oeil gauche. En appliquant un facteur de grossissement égal à « 2 », le champ de vision FOV de la caméra virtuelle devient égal à 55° en vertical et autant en horizontal.

Dans une étape 406, lorsqu'un facteur de grossissement est à appliquer, les jumelles de visée HMD 120 redéfinissent les dimensions d'une fenêtre de projection de la trame vidéo de capture, et préférentiellement d'une fenêtre de projection d'un réticule.

En effet, par défaut, sans facteur de grossissement, la trame vidéo de capture est projetée sur une fenêtre de projection E3 dont les dimensions sont conformes au champ de vision FOV horizontal de 77° de la caméra 8 et selon un ratio dimension horizontale sur dimension verticale de 4/3 (voir Fig. 8A). Ainsi, par construction, étant donnée la différence entre le FOV de la caméra 8 et celui de la caméra virtuelle de la jumelle de visée, les dimensions des fenêtres de projection E3 et E2 ne sont pas identiques et, bien qu'elles soient toutes les deux centrées, ne se superposent pas complètement. Un masque opaque (e.g., noir) est alors appliqué par les jumelles de visée HMD 120 autour de la fenêtre de projection E3, de sorte à masquer la différence de surface entre la fenêtre de projection E3 et la fenêtre de projection E2. Le réticule dans la présente description est une image sur fond transparent de dimension carrée, ou rectangulaire, pouvant représenter par exemple une graduation simple ou multiple, croisée ou non, et permettant à l'entraîné principal d'effectuer des visées précises. Le réticule est projeté sur une fenêtre de projection E1 (voir Fig. 8A) dont les dimensions sont conformes à un champ de vision FOV horizontal correspondant à l'écart angulaire entre l'extrémité gauche et l'extrémité droite des graduations du réticule (exprimées par exemple en mils OTAN : 6400 mils = 2 PI radians). Il suffit donc de compter les graduations horizontales du réticule pour obtenir les dimensions horizontales du champ de vision FOV correspondant au réticule en mils OTAN (on peut utiliser toute autre unité de mesure angulaire selon le modèle de jumelles de visée simulé et son réticule). Le même principe s'applique aux dimensions verticales du champ de vision FOV correspondant au réticule, dans l'éventualité où ce dernier disposerait de graduations verticales. Dans le cas contraire, les dimensions verticales du champ de vision FOV correspondant au réticule sont définies de manière à respecter précisément le ratio horizontal et vertical de l'image du réticule.

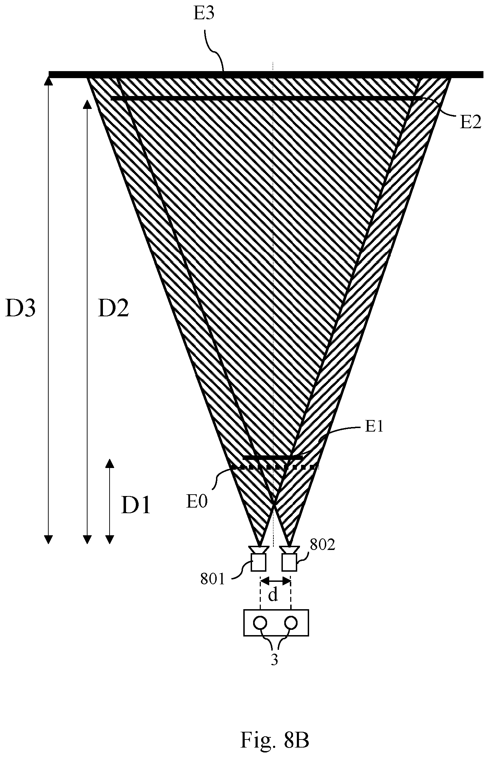

Lorsqu'un facteur de grossissement est appliqué, les dimensions de la fenêtre de projection E3 sont augmentées (en vertical et en horizontal, par rapport à la fenêtre de projection E3 sans facteur de grossissement) de la même proportion que le facteur de grossissement à appliquer. En d'autres termes, la dimension horizontale et la dimension verticale de la fenêtre de projection E3 sont doublées lorsque le facteur de grossissement est égal à « 2 ». Une adaptation de la taille de la fenêtre de projection E3 selon un facteur de grossissement à appliquer est schématiquement montrée sur la Fig. 8B. A noter que, suite au redimensionnement de la fenêtre de projection E3 selon le facteur de grossissement à appliquer, la fenêtre de projection E3 peut devenir plus grande que la fenêtre de projection E2. Lorsqu'un réticule est à afficher, les jumelles de visée HMD 120 ajustent les dimensions de la fenêtre de projection E1 de la même manière qu'elles ajustent les dimensions de la fenêtre de projection E3 (i.e., doublées lorsque le facteur de grossissement est égal à « 2 »).

Dans une étape 407, les jumelles de visée HMD 120 superposent, dans une scène virtuelle locale aux jumelles de visée HMD 120, le rendu en 2D des objets virtuels avec la trame vidéo de capture, et éventuellement le réticule.

La fenêtre de projection E2 est placée sur un plan, orthogonal à l'axe de visée, à une distance D2 de la position de la caméra stéréoscopique virtuelle qui coïncide avec la position du point d'observation. L'axe de visée passe par le centre de la fenêtre de projection E2. Par exemple, la distance D2 est fixée à 10 mètres.

La fenêtre de projection E3 est placée sur un plan, orthogonal à l'axe de visée, à une distance D3 de la position de l'entraîné principal (point d'observation). L'axe de visée passe par le centre de la fenêtre de projection E3. La distance D3 est supérieure à la distance D2 pour assurer que les objets virtuels du scénario d'entraînement soient superposés à la trame vidéo de capture dans la réalité mixte. Par exemple, la distance D3 est fixée à environ 10 mètres plus 1 centimètre.

Lorsqu'un réticule (sur fond transparent) est à afficher, la fenêtre de projection E1 est placée sur un plan, orthogonal à l'axe de visée, à une distance D1 de la position de l'entraîné principal (point d'observation). L'axe de visée passe par le centre de la fenêtre de projection E1. La distance D1 est inférieure à la distance D2 pour assurer que le réticule soit superposé aux objets virtuels du scénario d'entraînement et à la trame vidéo de capture dans la réalité mixte. Par exemple, la distance D1 est fixée à environ 1 mètre (valeur permettant d'accommoder de manière confortable pour la grande majorité des utilisateurs).

Ainsi, lorsqu'un facteur de grossissement est à appliquer, aucune modification de grossissement n'est faite au niveau de la caméra 8, qui reste en champ de vision FOV natif, ce qui limite les décrochages de l'algorithme SLAM.

Dans une étape optionnelle 408, les jumelles de visée HMD 120 insèrent, en superposition en premier plan, des informations complémentaires, telles que des informations de télémétrie (distance par rapport à une cible, azimut de visée, etc.) et/ou de l'éventuel facteur de grossissement appliqué à l'étape 406. Ces informations complémentaires sont typiquement des informations de nature textuelle, mais peuvent être aussi des informations de nature graphique (icône, logo...). Ces informations complémentaires éventuelles sont affichées dans une fenêtre de projection E0 en premier plan, par exemple à 1 mètre moins 1 centimètre. La fenêtre de projection E0 n'est pas affectée par un quelconque éventuel facteur de grossissement, car ce dernier ne doit avoir aucun impact sur la taille d'affichage de ces informations complémentaires. En d'autres termes, la fenêtre de projection E0 est insensible au facteur de grossissement.

Dans une étape 409, les jumelles de visée HMD 120 obtiennent une image stéréoscopique de réalité mixte à partir de la superposition des différents plans explicités ci-dessus. L'image stéréoscopique (en réalité un couple d'images) est obtenue à l'aide d'une paire de caméras virtuelles 801, 802. Le champ de vision FOV (angulaire) de la caméra virtuelle utilisée pour le rendu en 2D à l'étape 405 sans application de facteur de grossissement est identique au champ de vision FOV (angulaire) de chacune des caméras virtuelles 801, 802, par exemple 110°. Les caméras virtuelles 801, 802 sont placées de part et d'autre, à équidistance, de l'axe de visée des jumelles de visée HMD 120, et présentent entre-elles le même écartement (« d » sur les Figs. 8A et 8B) que les lentilles 3, généralement appelé distance interoculaire du dispositif binoculaire (cf. lentilles 3). Leurs directions de visée respectives sont parallèles à l'axe de visée des jumelles de visée HMD 120.

Dans une étape 410, les jumelles de visée HMD 120 affichent l'image stéréoscopique oeil droit / oeil gauche de réalité mixte telle qu'obtenue par exécution des étapes précédentes de l'algorithme de la Fig. 4 sur l'écran du téléphone portable intelligent 2 ou sur l'écran de des jumelles de visée HMD 120 si celles-ci disposent de leur propre écran intégré. L'écran est séparé en deux parties égales. L'image stéréoscopique correspondant à la caméra virtuelle 801 (oeil gauche) est affichée dans la partie gauche de l'écran, l'image stéréoscopique correspondant à la caméra virtuelle 802 (oeil droit) est affichée dans la partie droite de l'écran. Les jumelles de visée HMD 120 peuvent appliquer une déformation de l'image stéréoscopique oeil droit / oeil gauche obtenue à l'étape 409, de sorte à compenser des déformations optiques induites par les lentilles 3. Dans le cas où les éléments graphiques de simulation relatifs aux objets virtuels affichés dans cette étape d'affichage de réalité mixte étaient accompagnés d'éléments audio de simulation, les jumelles de visée HMD 120 jouent, simultanément à l'affichage en réalité mixte, lesdits éléments audio de simulation.

L'algorithme de la Fig. 4 est ainsi successivement itéré pour chaque trame vidéo capturée par la caméra 8.

La **Fig. 5** illustre schématiquement un algorithme d'obtention d'informations d'orientation utilisées dans la gestion d'affichage via les jumelles de visée HMD 120. L'algorithme de la Fig. 5 est un mode de réalisation particulier de l'étape 403 en ce qui concerne la récupération, pour chaque trame vidéo capturée par la caméra 8, des informations d'orientation et éventuellement de position applicables.

Dans une étape 501, les jumelles de visée HMD 120 effectuent un suivi de l'algorithme SLAM. Comme déjà indiqué, l'algorithme SLAM fournit des informations d'orientation et de position (géographique) de la caméra 8, et donc plus généralement de l'axe de visée des jumelles de visée HMD 120. L'algorithme SLAM fournit en outre une information représentative d'un décrochage ou pas de l'algorithme SLAM. Selon un exemple, l'algorithme SLAM gère un drapeau (« flag » en anglais) indiquant si l'algorithme SLAM a décroché (e.g., drapeau à la valeur « 1 » ou à la valeur booléenne « oui ») ou pas (e.g., drapeau à la valeur « 0 » ou à la valeur booléenne « non »). Selon un autre exemple, l'algorithme SLAM fournit un indice de confiance associé aux informations d'orientation et de position. La valeur de cet indice de confiance dépend d'un nombre de références que l'algorithme SLAM est parvenu à détecter dans les trames vidéo capturées par la caméra 8 pour se repérer dans l'espace. Lorsque l'indice de confiance est inférieur à un seuil prédéfini, l'algorithme SLAM indique avoir décroché ; sinon, les informations d'orientation et de position de l'algorithme SLAM sont considérées comme fiables. Les jumelles de visée HMD 120 peuvent aussi comparer l'indice de confiance avec une paire de seuils (haut et bas) afin de mettre en place un principe d'hystérésis.

Dans une étape 502, les jumelles de visée HMD 120 vérifient si l'algorithme SLAM a décroché ou pas. Lorsque l'algorithme SLAM a décroché, une étape 505 est effectuée ; sinon, une étape 503 est effectuée.

Dans l'étape 503, les jumelles de visée HMD 120 obtiennent les informations d'orientation de l'algorithme SLAM.

Puis, dans une étape 504, les jumelles de visée HMD 120 corrigent les informations d'orientation de l'algorithme SLAM en accord avec le résultat des opérations de calibration. Comme décrit en relation avec la Fig. 4, ces informations d'orientation corrigées sont utilisées pour requérir auprès de la plateforme de simulation SIMP 130 les éléments à afficher dans la scène virtuelle. Il est alors mis fin à l'algorithme de la Fig. 5.

Dans l'étape 505, les jumelles de visée HMD 120 obtiennent les informations d'orientation de l'algorithme SLAM avant décrochage. Typiquement, les jumelles de visée HMD 120 enregistrent en mémoire les informations d'orientation de l'algorithme SLAM à chaque trame vidéo capturée par la caméra 8, en écrasant les informations d'orientation précédemment mémorisées, tant que l'algorithme SLAM n'a pas décroché. Lorsque l'algorithme SLAM décroche, les jumelles de visée HMD 120 récupèrent en mémoire les dernières informations d'orientation ainsi mémorisées, afin d'obtenir les informations d'orientation de l'algorithme SLAM avant décrochage.

Puis, dans une étape 506, les jumelles de visée HMD 120 obtiennent les informations d'orientation du capteur de type unité de mesures inertielles IMU avant décrochage de l'algorithme SLAM. Typiquement, les jumelles de visée HMD 120 enregistrent en mémoire les informations d'orientation du capteur de type unité de mesures inertielles IMU à chaque trame vidéo capturée par la caméra 8, en écrasant les informations d'orientation précédemment mémorisées. Lorsque l'algorithme SLAM décroche, les jumelles de visée HMD 120 récupèrent en mémoire les dernières informations d'orientation ainsi mémorisées, afin d'obtenir les informations d'orientation du capteur de type unité de mesures inertielles IMU avant décrochage de l'algorithme SLAM.

Dans une étape 507, les jumelles de visée HMD 120 obtiennent les informations d'orientation actualisées du capteur de type unité de mesures inertielles IMU.

Dans une étape 504, les jumelles de visée HMD 120 corrigent les informations d'orientation actualisées du capteur de type unité de mesures inertielles IMU en accord avec le résultat des opérations de calibration, et en les ajustant par la différence entre les informations d'orientation du capteur de type unité de mesures inertielles IMU avant décrochage de l'algorithme SLAM et les informations d'orientation de l'algorithme SLAM avant décrochage.

Dans un mode de réalisation particulier, les jumelles de visée HMD 120 corrigent les informations d'orientation actualisées du capteur de type unité de mesures inertielles IMU de la façon suivante :

$$Q_{abs}(t) = Q_{abs}(t0) * Q_{imu}^{-1}(t0) * Q_{imu}(t)$$

où :

- $Q_{abs}(t)$ représente les informations d'orientation corrigées ;
- $Q_{abs}(t0)$ représente les informations d'orientation absolues, c'est-à-dire celles issues de l'algorithme SLAM, avant décrochage ;
- $Q_{imu}(t)$ représente les informations d'orientation actualisées du capteur de type unité de mesures inertielles IMU ; et
- $Q_{imu}(t0)$ représente les informations d'orientation du capteur de type unité de mesures inertielles IMU avant décrochage de l'algorithme SLAM,

et où les informations d'orientation sont représentées sous la forme de quaternions représentatifs des angles d'Euler après correction, pour l'algorithme SLAM, des écarts révélés par les opérations de calibration.

On peut se référer aux indications fournies au lien suivant pour convertir les angles d'Euler en quaternions :

https://en.wikipedia.org/wiki/Conversion_between_quaternions_and_Euler_angles

Ces informations d'orientation corrigées sont alors utilisées pour requérir auprès de la plateforme de simulation SIMP 130 les éléments à afficher dans la scène virtuelle. Il est alors mis fin à l'algorithme de la Fig. 5.

Les angles d'Euler fournis par l'algorithme SLAM peuvent être fournis de manière relative, c'est-à-dire par différence par rapport à une valeur précédente (par exemple par différence par rapport à la première trame vidéo utilisée par l'algorithme de SLAM). Les informations de position fournies par l'algorithme SLAM peuvent aussi être fournies de manière relative (ce qui donne des informations de translation). Il peut donc être nécessaire de procéder à des opérations préalables de calibration, telles que décrites ci-après pour déterminer avec précision des références absolues de position et d'orientation de la caméra 8 avant application des informations d'orientation et de translation relatives fournies par l'algorithme SLAM.

Dans un mode de réalisation particulier, lorsque l'algorithme SLAM a décroché, les jumelles de visée HMD 120 s'appuient sur le récepteur GPS pour obtenir des informations de position (géolocalisation) des jumelles de visée HMD 120, comme précédemment décrit ; sinon, les jumelles de visée HMD 120 s'appuient sur l'algorithme SLAM pour obtenir en outre lesdites informations de position des jumelles de visée HMD 120 (que ce soit de manière relative par rapport à une précédente valeur ou de manière absolue).

La Fig. 6 illustre schématiquement des décalages à prendre en considération pour une calibration de l'affichage via les jumelles de visée HMD 120. La Fig. 6 montre une représentation de terrain 600 en vue de côté, où sont placées deux caméras 601 et 602, où la caméra 601 correspond à la caméra 8 et la caméra 602 correspond à la caméra virtuelle. Les positions géographiques des caméras 601 et 602 coïncident, mais la caméra 602 peut présenter un écart latéral (« heading déviation » en anglais) $\Delta H$, un écart d'inclinaison (« pitch déviation » en anglais) $\Delta\theta$ et un écart vertical (« vertical déviation » en anglais) $\Delta V$ ou d'altitude par rapport à la caméra 601. La partie droite de la Fig. 6 montre un rendu 620 en deux dimensions de la superposition des trames vidéo des caméras 601 et 602, par projection sur un plan 630. Un même objet 610, situé géographiquement à une distance D par rapport à la position géographique des caméras 601 et 602, y est représenté par un objet 611 dans la scène réelle et par un objet 612 dans la scène virtuelle, respectivement obtenus par projection de l'objet 610 sur un plan de projection caméra 631 et sur un plan de projection caméra 632. Lorsque la position et l'orientation de la caméra virtuelle sont parfaitement synchronisées et confondues avec la caméra 8, les objets 611 et 612 sont confondus.

Les écarts de référencement entre la scène réelle, telle que capturée par la caméra 8, et la scène virtuelle, telle que générée par les jumelles de visée HMD 120 et la plateforme de simulation SIMP 130 peuvent ainsi être déterminés par trigonométrie, afin d'être corrigés, comme décrit ci-après, lors de la simulation d'entraînement.

La Fig. 7 illustre schématiquement un algorithme de calibration de l'affichage via les jumelles de visée HMD 120.

Dans une étape 701, les jumelles de visée HMD 120 activent un mode de calibration. Le mode de calibration est par exemple activé par appui sur le bouton 4. Selon un autre exemple, le mode de calibration est activé par réception d'un message en provenance de la plateforme de simulation SIMP 130 ou du simulateur de système de type ROVER 140. Le message peut en variante venir de tout autre dispositif externe aux jumelles de visée HMD 120 et apte à communiquer avec les jumelles de visée HMD 120.

Dans une étape 702, les jumelles de visée HMD 120 requièrent auprès de la plateforme de simulation SIMP 130 de recevoir des données permettant l'affichage d'un objet virtuel qui sert de cible de calibration. Cet objet virtuel est placé dans le scénario virtuel sur une position remarquable de la scène réelle (devant un arbre ou un poteau par exemple). Au départ, la calibration n'ayant pas encore été effectuée, l'objet virtuel est affiché au mauvais endroit sur l'image réelle de la caméra 8.

Dans une étape 703, des réglages sont réalisés pour effectuer la calibration. Pour ce faire, l'entraîné principal vise avec les jumelles de visée HMD 120 cet objet virtuel, puis appuie sur un bouton (bouton de calibration) des jumelles de visée HMD 120. Viser l'objet virtuel revient à placer l'objet virtuel sur l'axe de visée des jumelles de visée HMD 120, en s'aidant notamment des réticules simulés. Les jumelles de visée HMD 120 obtiennent alors des premières informations d'orientation de la caméra 8 lorsqu'un premier appui sur le bouton de calibration des jumelles de visée HMD 120 est effectué. Les jumelles de visée HMD 120 mémorisent alors l'orientation de cette visée non encore corrigée par la calibration. Ensuite, l'entraîné principal vise avec les jumelles de visée HMD 120 dans la scène réelle la position remarquable souhaitée pour cet objet virtuel (définie dans le scénario virtuel), puis appuie sur un bouton des jumelles de visée HMD 120. Les jumelles de visée HMD 120 obtiennent alors des secondes informations d'orientation de la caméra 8 lorsqu'un second appui sur le bouton de calibration des jumelles de visée HMD 120 est effectué. Les jumelles de visée HMD 120 mémorisent alors l'orientation de cette visée, qui correspond à l'orientation après application de la correction de calibration. Les jumelles de visée HMD 120 peuvent alors comparer les premières informations d'orientation et les secondes informations d'orientation et en déduire des écarts d'informations d'orientation et d'altitude correspondants.

En variante de réalisation, les réglages sont effectués par compensation progressive des écarts (e.g. angulaires) observés entre la position de la cible virtuelle et sa position réelle visible dans la vue capturée par la caméra 8. La compensation progressive s'effectue grâce à des commandes des jumelles de visée HMD 120, par exemple par rotation de molettes électromécaniques. Par exemple, une première molette électromécanique permet de faire varier l'écart latéral $\Delta H$ et une seconde molette électromécanique permet de faire varier l'écart vertical $\Delta V$, ce qui a indirectement un impact sur l'écart d'inclinaison $\Delta\theta$. Lorsque la cible de calibration virtuelle coïncide avec la cible de calibration réelle, les réglages de calibration sont effectués.

Dans une étape 704, les jumelles de visée HMD 120 mémorisent les réglages effectués à l'étape 703.

Dans une étape 705, les jumelles de visée HMD 120 effectuent une conversion des réglages en décalage d'informations d'orientation et d'altitude correspondants. Par exemple, les jumelles de visée HMD 120 déterminent l'écart latéral $\Delta H$ à appliquer par différence entre l'angle de lacet (heading) extrait des premières informations d'orientation et l'angle de lacet (heading) extrait des deuxièmes informations d'orientation obtenues successivement dans l'étape 703.

Selon un autre exemple, les jumelles de visée HMD 120 déterminent l'écart vertical $\Delta V$ à appliquer grâce à une formule trigonométrique utilisant l'angle de tangage (pitch) extrait des premières informations d'orientation et l'angle de tangage (pitch) extrait des deuxièmes informations d'orientation obtenues successivement dans l'étape 703. En effet, par construction géométrique comme présentée sur la Fig. 6, l'angle de tangage (pitch) extrait des premières informations d'orientation est l'angle $\theta2$ et l'angle de tangage (pitch) extrait des deuxièmes informations d'orientation est l'angle $\theta1$. La distance à la cible D étant déterminée par un calcul de télémétrie tel que détaillé précédemment, ou fixée par configuration dans le système, on peut en déduire la valeur de l'écart entre l'altitude réelle de la caméra 8 et l'altitude de la caméra dans la scène virtuelle par la formule suivante :

$$\Delta V = (\tan \theta_1 - \tan \theta_2) * D$$

Dans une étape 706, les jumelles de visée HMD 120 désactivent le mode de calibration. Seuls l'écart vertical $\Delta V$ et l'écart latéral $\Delta H$ sont alors pris en compte pour déterminer de manière absolue la position et l'orientation de la caméra 8 et de la caméra virtuelle des jumelles de visée HMD 120, afin qu'elles soient confondues, et permettre ainsi aux images générées de la scène virtuelle d'être parfaitement synchronisées et superposées avec les trames vidéo de la scène réelle filmée par la caméra 8.

## Revendications

1. Jumelles de visée de simulation comportant une caméra, un écran, une paire de lentilles agencées pour faire face à l'écran, et de la circuiterie électronique configurée pour :

   - obtenir une trame vidéo de la caméra, la trame vidéo étant destinée à être affichée par les jumelles de visée de simulation dans une fenêtre de projection E3 ;
   - obtenir des informations de géolocalisation des jumelles de visée de simulation et des informations d'orientation de la caméra ;
   - transmettre les informations de géolocalisation et d'orientation à une plateforme de simulation ;
   - recevoir des éléments graphiques de simulation et des informations de positionnement dans l'espace d'objets virtuels en trois dimensions correspondant aux éléments graphiques de simulation ;
   - effectuer un rendu en deux dimensions des objets virtuels en fonction des informations de positionnement, afin d'afficher les objets virtuels dans une fenêtre de projection E2, et lorsqu'un facteur de grossissement est à appliquer, maintenir fixes les dimensions de la fenêtre de projection E2 et ajuster le champ de vision du rendu en deux dimensions selon le facteur de grossissement ;
   - superposer, dans une scène virtuelle locale aux jumelles de visée de simulation, le rendu en deux dimensions des objets virtuels dans la fenêtre de projection E2 et les trames vidéo dans la fenêtre de projection E3, la fenêtre de projection E3 étant placée dans un plan plus éloigné des jumelles de visée de simulation que celui où est placée la fenêtre de projection E2 dans le champ de vision des jumelles de visée de simulation, les jumelles de visée de simulation ayant un axe de visée qui passe par le centre des fenêtres de projection E2 et E3, et lorsque le facteur de grossissement est à appliquer, ajuster les dimensions de la fenêtre de projection E3 selon le facteur de grossissement ;
- obtenir une image stéréoscopique de réalité mixte à partir de la superposition des plans à l'aide d'une paire de caméras virtuelles reproduisant une vision binoculaire ; et
- effectuer, sur l'écran, un affichage oeil droit et oeil gauche de l'image stéréoscopique de réalité mixte obtenue.

2. Jumelles de visée de simulation selon la revendication 1, dans lesquelles la circuiterie électronique est configurée pour :

- superposer en outre, dans la scène virtuelle locale aux jumelles de visée de simulation, un réticule dans une fenêtre de projection E1 placée dans un plan plus rapproché des jumelles de visée de simulation que celui où est placée la fenêtre de projection E2 dans le champ de vision des jumelles de visée de simulation, l'axe de visée passant aussi par le centre de la fenêtre de projection E1, et lorsqu'un facteur de grossissement est à appliquer, ajuster les dimensions de la fenêtre de projection E1 selon le facteur de grossissement.

3. Jumelles de visée de simulation selon la revendication 1 ou 2, dans lesquelles la circuiterie électronique est configurée pour :

- superposer en outre, dans la scène virtuelle locale aux jumelles de visée de simulation, des informations complémentaires dans une fenêtre de projection E0 placée dans un plan plus rapproché des jumelles de visée de simulation que celui où est placée la fenêtre de projection E1 dans le champ de vision des jumelles de visée de simulation, la fenêtre de projection E0 étant insensible au facteur de grossissement.

4. Jumelles de visée de simulation selon l'une quelconque des revendications 1 à 3, dans lesquelles l'écran, la caméra et la circuiterie électronique sont fournis par un téléphone portable intelligent assemblé à un boîtier comportant la paire de lentilles, qui sont agencées pour faire face à l'écran du téléphone portable intelligent.

5. Jumelles de visée de simulation selon l'une quelconque des revendications 1 à 4, comportant en outre un capteur de type unité de mesure inertielle, et dans lesquelles la circuiterie électronique implémente un algorithme de Localisation et Cartographie Simultanées SLAM, et les informations d'orientation de la caméra sont fournies par l'algorithme de Localisation et Cartographie Simultanées SLAM, sauf lorsque l'algorithme de Localisation et Cartographie Simultanées SLAM décroche, auquel cas les informations d'orientation de la caméra sont fournies par le capteur de type unité de mesure inertielle.

6. Jumelles de visée de simulation selon la revendication 5, dans lesquelles les informations de géolocalisation des jumelles de visée de simulation sont fournies par l'algorithme de Localisation et Cartographie Simultanées SLAM, sauf lorsque l'algorithme de Localisation et Cartographie Simultanées SLAM décroche, auquel cas les informations de géolocalisation des jumelles de visée de simulation sont fournies par un récepteur GPS intégré aux jumelles de visée de simulation.

7. Jumelles de visée de simulation selon la revendication 5 ou 6, dans lesquelles l'algorithme de Localisation et Cartographie Simultanées SLAM fournit un indice de confiance associé aux informations d'orientation de la caméra, pour chaque trame vidéo capturée par la caméra, et la circuiterie électronique est configurée pour déterminer si l'algorithme de Localisation et Cartographie Simultanées SLAM a décroché selon la valeur de l'indice de confiance.

8. Jumelles de visée de simulation selon la revendication 5 ou 6, dans lesquelles, lorsque l'algorithme de Localisation et Cartographie Simultanées SLAM a décroché, la circuiterie électronique corrige les informations d'orientation actualisées du capteur de type unité de mesures inertielles IMU de la façon suivante :

$$Q_{abs}(t) = Q_{abs}(t0) * Q_{imu}^{-1}(t0) * Q_{imu}(t)$$

où :

- $Q_{abs}(t)$ représente les informations d'orientation corrigées ;
- $Q_{abs}(t0)$ représente les informations d'orientation absolues, c'est-à-dire celles issues de l'algorithme SLAM, avant décrochage ;
- $Q_{imu}(t)$ représente les informations d'orientation actualisées du capteur de type unité de mesures inertielles IMU ; et
- $Q_{imu}(t0)$ représente les informations d'orientation du capteur de type unité de mesures inertielles IMU avant décrochage de l'algorithme SLAM.

9. Jumelles de visée de simulation selon l'une quelconque des revendications 5 à 8, dans lesquelles la circuiterie électronique corrige les informations d'orientation fournies par l'algorithme de Localisation et Cartographie Simultanées SLAM selon des écarts déterminés lors d'opérations de calibration.

10. Jumelles de visée de simulation selon la revendication 9, dans lesquelles la circuiterie électronique est configurée pour, lors des opérations de calibration :

   - recevoir des éléments graphiques de simulation correspondant à un objet virtuel de calibration et des informations de positionnement dans l'espace de l'objet virtuel de calibration ;
   - effectuer, sur l'écran, un affichage stéréoscopique oeil droit et oeil gauche d'une image stéréoscopique de réalité mixte incluant l'objet virtuel de calibration ;
   - obtenir des premières informations d'orientation de la caméra lorsqu'un premier appui sur un bouton de calibration des jumelles de visée de simulation est effectué ;
   - obtenir des secondes informations d'orientation de la caméra lorsqu'un second appui sur le bouton de calibration des jumelles de visée de simulation est effectué ; et
   - comparer les premières informations d'orientation et les secondes informations d'orientation et en déduire des écarts d'informations d'orientation et d'altitude correspondants.

11. Système de simulation comportant une plateforme de simulation, ainsi que des jumelles de visée de simulation selon l'une quelconque des revendications 1 à 10, la plateforme de simulation comportant de la circuiterie électronique configurée pour placer, selon un scénario d'entraînement, des objets virtuels dans un modèle numérique de terrain modélisant un terrain d'entraînement où les jumelles de visée de simulation sont destinées à être utilisées, et pour transmettre ou faire transmettre aux jumelles de visée de simulation les éléments graphiques de simulation selon les informations de géolocalisation des jumelles de visée de simulation et les informations d'orientation de caméra qui sont transmises par les jumelles de visée de simulation.

12. Système de simulation selon la revendication 11, dans lequel la plateforme de simulation transmet ou fait transmettre aux jumelles de visée de simulation les éléments graphiques de simulation de manière asynchrone par rapport aux informations de géolocalisation des jumelles de visée de simulation et aux informations d'orientation de caméra, les jumelles de visée de simulation effectuent des interpolations de positionnement des objets virtuels et une première unité de traitement du système de simulation qui est déportée par rapport aux jumelles de visée de simulation effectue, pour le compte des jumelles de visée de simulation, un recalage de positionnement grâce au modèle numérique de terrain.

13. Système de simulation selon la revendication 11 ou 12, dans lequel lorsque les jumelles de visée de simulation activent une lecture de télémétrie, une seconde unité de traitement du système de simulation qui est déportée par rapport aux jumelles de visée de simulation effectue un calcul de distance par rapport à une cible visée par les jumelles de visée de simulation en utilisant une méthode de tracé de rayon dans une scène virtuelle incluant lesdits objets virtuels et le modèle numérique de terrain.

14. Procédé de simulation, implémenté par une circuiterie électronique de jumelles de visée de simulation comportant en outre une caméra, un écran et une paire de lentilles agencées pour faire face à l'écran, le procédé comportant les étapes suivantes :

   - obtenir une trame vidéo de la caméra, la trame vidéo étant destinée à être affichée par les jumelles de visée de simulation dans une fenêtre de projection E3 ;
   - obtenir des informations de géolocalisation des jumelles de visée de simulation et des informations d'orientation de la caméra ;
   - transmettre les informations de géolocalisation et d'orientation à une plateforme de simulation ;
   - recevoir des éléments graphiques de simulation et des informations de positionnement dans l'espace d'objets virtuels en trois dimensions correspondant aux éléments graphiques de simulation ;
   - effectuer un rendu en deux dimensions des objets virtuels en fonction des informations de positionnement, afin d'afficher les objets virtuels dans une fenêtre de projection E2, et lorsqu'un facteur de grossissement est à appliquer, maintenir fixes les dimensions de la fenêtre de projection E2 et ajuster le champ de vision du rendu en deux dimensions selon le facteur de grossissement ;
   - superposer, dans une scène virtuelle locale aux jumelles de visée de simulation, le rendu en deux dimensions des objets virtuels dans la fenêtre de projection E2 et les trames vidéo dans la fenêtre de projection E3, la fenêtre de projection E3 étant placée dans un plan plus éloigné des jumelles de visée de simulation que celui où est placée la fenêtre de projection E2 dans le champ de vision des jumelles de visée de simulation, les jumelles de visée de simulation ayant un axe de visée qui passe par le centre des fenêtres de projection E2 et E3, et lorsque le facteur de grossissement est à appliquer, ajuster les dimensions de la fenêtre de projection E3 selon le facteur de grossissement ;
- obtenir une image stéréoscopique de réalité mixte à partir de la superposition des plans à l'aide d'une paire de caméras virtuelles reproduisant une vision binoculaire adaptée à la paire de lentilles ; et
- effectuer, sur l'écran, un affichage oeil droit et oeil gauche de l'image stéréoscopique de réalité mixte obtenue.

15. Procédé de simulation, implémenté par un système de simulation incluant des jumelles de visée de simulation implémentant le procédé de simulation selon la revendication 14 et une plateforme de simulation comportant de la circuiterie électronique, implémentant les étapes suivantes :

   - placer, selon un scénario d'entraînement, des objets virtuels dans un modèle numérique de terrain en trois dimensions modélisant un terrain d'entraînement où les jumelles de visée de simulation sont utilisées ; et
   - transmettre ou faire transmettre aux jumelles de visée de simulation des éléments graphiques correspondant aux objets virtuels selon les informations de géolocalisation des jumelles de visée de simulation et les informations d'orientation de leur caméra qui sont transmises par les jumelles de visée de simulation.

16. Produit programme d'ordinateur, comportant des instructions entraînant l'exécution, par des jumelles de visée de simulation selon la revendication 1, du procédé selon la revendication 14, lorsque lesdites instructions sont exécutées par un processeur.


**Patentansprüche**

1. Simulationsfernglas, umfassend eine Kamera, einen Bildschirm, ein Paar Linsen, die dazu ausgestaltet sind, gegenüber der Kamera zu liegen, und eine elektronische Schaltung, die dazu ausgebildet ist:

   - ein Videobild der Kamera zu erhalten, wobei das Videobild dazu bestimmt ist, von dem Simulationsfernglas in einem Projektionsfenster E3 angezeigt zu werden;
   - Geolokalisierungsinformationen des Simulationsfernglases und Ausrichtungsinformationen der Kamera zu erhalten;
   - die Geolokalisierungs- und Ausrichtungsinformationen zu einer Simulationsplattform zu übertragen;
   - grafische Simulationselemente und Informationen zur Positionierung im Raum von dreidimensionalen virtuellen Objekten, die den grafischen Simulationselementen entsprechen, zu empfangen;
   - eine zweidimensionale Wiedergabe der virtuellen Objekte in Abhängigkeit von den Positionierungsinformationen durchzuführen, um die virtuellen Objekte in einem Projektionsfenster E2 anzuzeigen, und, wenn ein Vergrößerungsfaktor anzuwenden ist, die Abmessungen des Projektionsfensters E2 fest beizubehalten und das Sichtfeld der zweidimensionalen Wiedergabe gemäß dem Vergrößerungsfaktor anzupassen;
   - in einer lokalen virtuellen Szene an dem Simulationsfernglas die zweidimensionale Wiedergabe der virtuellen Objekte in dem Projektionsfenster E2 und die Videobilder in dem Projektionsfenster E3 zu überlagern, wobei das Projektionsfenster E3 in einer Ebene platziert ist, die von dem Simulationsfernglas weiter entfernt ist als die, in der das Projektionsfenster E2 in dem Sichtfeld des Simulationsfernglases platziert ist, wobei das Simulationsfernglas eine Sichtachse hat, die durch den Mittelpunkt der Projektionsfenster E2 und E3 verläuft, und, wenn der Vergrößerungsfaktor anzuwenden ist, die Abmessungen des Projektionsfensters E3 gemäß dem Vergrößerungsfaktor anzupassen;
   - ein stereoskopisches Bild gemischter Realität ausgehend von der Überlagerung der Ebenen mithilfe eines Paars virtueller Kameras zu erhalten, die ein binokulares Sehen reproduzieren; und
   - auf dem Bildschirm eine Anzeige für das rechte Auge und für das linke Auge des erhaltenen stereoskopischen Bilds gemischter Realität durchzuführen.

2. Simulationsfernglas nach Anspruch 1, wobei die elektronische Schaltung dazu ausgebildet ist:

   - in der lokalen virtuellen Szene an dem Simulationsfernglas ferner ein Fadenkreuz in einem Projektionsfenster E1 zu überlagern, das in einer Ebene platziert ist, die dem Simulationsfernglas näher ist als diejenige, in der das Projektionsfenster E2 in dem Sichtfeld des Simulationsfernglases platziert ist, wobei die Sichtachse ebenfalls durch den Mittelpunkt des Projektionsfensters E1 verläuft, und, wenn ein Vergrößerungsfaktor anzuwenden ist, die Abmessungen des Projektionsfensters E1 gemäß dem Vergrößerungsfaktor anzupassen.

**3.** Simulationsfernglas nach Anspruch 1 oder 2, wobei die elektronische Schaltung dazu ausgebildet ist:

- in der lokalen virtuellen Szene an dem Simulationsfernglas ferner ergänzende Informationen in einem Projektionsfenster E0 zu überlagern, das in einer Ebene platziert ist, die dem Simulationsfernglas näher ist als diejenige, in der das Projektionsfenster E1 in dem Sichtfeld des Simulationsfernglases platziert ist, wobei das Projektionsfenster E0 unempfindlich für den Vergrößerungsfaktor ist.

**4.** Simulationsfernglas nach einem der Ansprüche 1 bis 3, wobei der Bildschirm, die Kamera und die elektronische Schaltung von einem Smartphone bereitgestellt werden, das an einem Gehäuse angebracht ist, welches das Paar Linsen umfasst, die dazu ausgestaltet sind, dem Bildschirm des Smartphones gegenüber zu liegen.

**5.** Simulationsfernglas nach einem der Ansprüche 1 bis 4, umfassend ferner einen Sensor vom Typ Trägheitsmesseinheit, und wobei die elektronische Schaltung einen Algorithmus zur simultanen Lokalisierung und Kartierung SLAM implementiert und die Ausrichtungsinformationen der Kamera von dem Algorithmus zur simultanen Lokalisierung und Kartierung SLAM bereitgestellt werden, außer wenn der Algorithmus zur simultanen Lokalisierung und Kartierung stecken bleibt, in welchem Fall die Ausrichtungsinformationen der Kamera von dem Sensor vom Typ Trägheitsmesseinheit bereitgestellt werden.

**6.** Simulationsfernglas nach Anspruch 5, wobei die Geolokalisierungsinformationen des Simulationsfernglases von dem Algorithmus zur simultanen Lokalisierung und Kartierung SLAM bereitgestellt werden, außer wenn der Algorithmus zur simultanen Lokalisierung und Kartierung SLAM stecken bleibt, in welchem Fall die Geolokalisierungsinformationen des Simulationsfernglases von einem in das Simulationsfernglas integrierten GPS-Empfänger bereitgestellt werden.

**7.** Simulationsfernglas nach Anspruch 5 oder 6, wobei der Algorithmus zur simultanen Lokalisierung und Kartierung SLAM einen den Ausrichtungsinformationen der Kamera zugeordneten Konfidenzindex für jedes von der Kamera aufgenommene Videobild bereitstellt und die elektronische Schaltung dazu ausgebildet ist, gemäß dem Wert des Konfidenzindex zu bestimmen, ob der Algorithmus zur simultanen Lokalisierung und Kartierung SLAM stecken geblieben ist.

**8.** Simulationsfernglas nach Anspruch 5 oder 6, wobei, wenn der Algorithmus zur simultanen Lokalisierung und Kartierung SLAM stecken geblieben ist, die elektronische Schaltung die aktualisierten Ausrichtungsinformationen des Sensors vom Typ Trägheitsmesseinheit IMU folgendermaßen korrigiert:

$$Q_{abs}(t) = Q_{abs}(t0) * Q_{imu}^{-1}(t0) * Q_{imu}(t)$$

worin:

- $Q_{abs}(t)$ für die korrigierten Ausrichtungsinformationen steht;
- $Q_{abs}(t0)$ für die absoluten Ausrichtungsinformationen steht, d. h. diejenigen, die aus dem Algorithmus SLAM vor dem Steckenbleiben hervorgegangen sind;
- $Q_{imu}(t)$ für die aktualisierten Ausrichtungsinformationen des Sensors vom Typ Trägheitsmesseinheit IMU steht; und
- $Q_{imu}(t0)$ für die Ausrichtungsinformationen des Sensors vom Typ Trägheitsmesseinheit IMU vor dem Steckenbleiben des Algorithmus SLAM steht.

**9.** Simulationsfernglas nach einem der Ansprüche 5 bis 8, wobei die elektronische Schaltung die vom dem Algorithmus zur simultanen Lokalisierung und Kartierung SLAM bereitgestellten Ausrichtungsinformationen gemäß Abweichungen korrigiert, die bei Kalibrierungsvorgängen bestimmt werden.

**10.** Simulationsfernglas nach Anspruch 9, wobei die elektronische Schaltung dazu ausgebildet ist, bei Kalibrierungsvorgängen:

- grafische Simulationselemente zu empfangen, die einem virtuellen Kalibrierungsobjekt entsprechen, und Informationen zur Positionierung im Raum des virtuellen Kalibrierungsobjekts;
- auf dem Bildschirm eine stereoskopische Anzeige für das rechte Auge und für das linke Auge eines stereoskopischen Bilds gemischter Realität durchzuführen, welches das virtuelle Kalibrierungsobjekt beinhaltet;
- erste Ausrichtungsinformationen der Kamera zu erhalten, wenn ein erstes Drücken auf eine Kalibrierungstaste des Simulationsfernglases durchgeführt wird;
- zweite Ausrichtungsinformationen der Kamera zu erhalten, wenn ein zweites Drücken auf eine Kalibrierungstaste des Simulationsfernglases durchgeführt wird; und
- die ersten Ausrichtungsinformationen und die zweiten Ausrichtungsinformationen zu vergleichen und daraus entsprechende Abweichungen von Ausrichtungs- und Höheninformationen abzuleiten.

11. Simulationssystem, umfassend eine Simulationsplattform sowie ein Simulationsfernglas nach einem der Ansprüche 1 bis 10, wobei die Simulationsplattform eine elektronische Schaltung umfasst, die dazu ausgebildet ist, gemäß einem Übungsszenario virtuelle Objekte in einem digitalen Geländemodell zu platzieren, das ein Übungsgelände modelliert, in dem das Simulationsfernglas verwendet werden soll, und zu dem Simulationsfernglas die grafischen Simulationsobjekte gemäß den Geolokalisierungsinformationen des Simulationsfernglases und den Ausrichtungsinformationen der Kamera, die von dem Simulationsfernglas übertragen werden, zu übertragen oder übertragen zu lassen.

12. Simulationssystem nach Anspruch 11, wobei die Simulationsplattform zu dem Simulationsfernglas die grafischen Simulationselemente asynchron in Bezug auf die Geolokalisierungsinformationen des Simulationsfernglases und die Ausrichtungsinformationen der Kamera überträgt oder übertragen lässt, das Simulationsfernglas Interpolationen zur Positionierung der virtuellen Objekte durchführt und eine erste Verarbeitungseinheit des Simulationssystems, die in Bezug auf das Simulationsfernglas abgesetzt ist, für das Simulationsfernglas dank des digitalen Geländemodells eine Positionierungsneueinstellung durchführt.

13. Simulationssystem nach Anspruch 11 oder 12, wobei, wenn das Simulationsfernglas eine Telemetrieerfassung aktiviert, eine zweite Verarbeitungseinheit des Simulationssystems, die in Bezug auf das Simulationsfernglas abgesetzt ist, eine Berechnung der Entfernung in Bezug auf ein Ziel durchführt, das von dem Simulationsfernglas anvisiert wird, indem eine Strahlverfolgungsmethode in einer virtuellen Szene verwendet wird, welche die virtuellen Objekte und das digitale Geländemodell beinhaltet.

14. Simulationsverfahren, das von einer elektronischen Schaltung eines Simulationsfernglases implementiert wird, das ferner eine Kamera, einen Bildschirm und ein Paar Linsen, die dazu ausgestaltet sind, dem Bildschirm gegenüber zu liegen, umfasst, wobei das Verfahren die folgenden Schritte umfasst:

- Erhalten eines Videobilds der Kamera, wobei das Videobild dazu bestimmt ist, von dem Simulationsfernglas in einem Projektionsfenster E3 angezeigt zu werden;
- Erhalten von Geolokalisierungsinformationen des Simulationsfernglases und Ausrichtungsinformationen der Kamera;
- Übertragen der Geolokalisierungs- und Ausrichtungsinformationen zu einer Simulationsplattform;
- Empfangen von grafischen Simulationselementen und Informationen zur Positionierung im Raum von dreidimensionalen virtuellen Objekten, die den grafischen Simulationselementen entsprechen;
- Durchführen einer zweidimensionalen Wiedergabe der virtuellen Objekte in Abhängigkeit von den Positionierungsinformationen, um die virtuellen Objekte in einem Projektionsfenster E2 anzuzeigen, und, wenn ein Vergrößerungsfaktor anzuwenden ist, festes Beibehalten der Abmessungen des Projektionsfensters E2 und Anpassen des Sichtfelds der zweidimensionalen Wiedergabe gemäß dem Vergrößerungsfaktor;
- Überlagern, in einer lokalen virtuellen Szene an dem Simulationsfernglas, der zweidimensionalen Wiedergabe der virtuellen Objekte in dem Projektionsfenster E2 und der Videobilder in dem Projektionsfenster E3, wobei das Projektionsfenster E3 in einer Ebene platziert ist, die von dem Simulationsfernglas weiter entfernt ist als die, in der das Projektionsfenster E2 in dem Sichtfeld des Simulationsfernglases platziert ist, wobei das Simulationsfernglas eine Sichtachse hat, die durch den Mittelpunkt der Projektionsfenster E2 und E3 verläuft, und, wenn der Vergrößerungsfaktor anzuwenden ist, Anpassen der Abmessungen des Projektionsfensters E3 gemäß dem Vergrößerungsfaktor;
- Erhalten eines stereoskopischen Bilds gemischter Realität ausgehend von der Überlagerung der Ebenen mithilfe eines Paars virtueller Kameras, die ein binokulares Sehen reproduzieren, das an das Paar von Linsen angepasst ist; und
- Durchführen, auf dem Bildschirm, einer Anzeige für das rechte Auge und für das linke Auge des erhaltenen stereoskopischen Bilds gemischter Realität.

15. Simulationsverfahren, das von einem Simulationssystem implementiert wird, das ein Simulationsfernglas, welches das Simulationsverfahren nach Anspruch 14 implementiert, und eine Simulationsplattform, welche die elektronische Schaltung umfasst, beinhaltet, implementierend die folgenden Schritte:

- Platzieren, gemäß einem Übungsszenario, von virtuellen Objekten in einem dreidimensionalen digitalen Geländemodell, das ein Übungsgelände modelliert, in dem das Simulationsfernglas verwendet wird; und
- Übertragen oder Übertragenlassen, zu dem Simulationsfernglas, von grafischen Elementen, die den virtuellen Objekten entsprechen, gemäß den Geolokalisierungsinformationen des Simulationsfernglases und den Ausrichtungsinformationen seiner Kamera, die von dem Simulationsfernglas übertragen werden.

16. Computerprogrammprodukt, das Anweisungen umfasst, die bei der Ausführung der Anweisungen durch einen Prozessor die Ausführung, durch ein Simulationsfernglas nach Anspruch 1, des Verfahrens nach Anspruch 14 bewirken.

**Claims**

1. Simulation sighting binoculars comprising a camera, a screen, a pair of lenses which are arranged to face the screen, and electronic circuitry which is configured to:

   - obtain a video frame from the camera, the video frame being intended to be displayed by the simulation sighting binoculars in a projection window E3;
   - obtain geolocation information for the simulation sighting binoculars and orientation information for the camera;
   - transmit the geolocation and orientation information to a simulation platform;
   - receive simulation graphical elements and spatial positioning information for three-dimensional virtual objects corresponding to the simulation graphical elements;
   - carry out a two-dimensional rendering of the virtual objects depending on the positioning information, in order to display the virtual objects in a projection window E2, and, when a magnification factor is to be applied, keep the dimensions of the projection window E2 fixed and adjust the field of view of the two-dimensional rendering according to the magnification factor;
   - superimpose, in a virtual scene which is local to the simulation sighting binoculars, the two-dimensional rendering of the virtual objects in the projection window E2 and the video frames in the projection window E3, the projection window E3 being placed in a plane which is farther from the simulation sighting binoculars than the one where the projection window E2 is placed in the field of view of the simulation sighting binoculars, the simulation sighting binoculars having a line of sight which passes through the centre of the projection windows E2 and E3, and, when the magnification factor is to be applied, adjust the dimensions of the projection window E3 according to the magnification factor;
   - obtain a mixed-reality stereoscopic image from superimposing the planes using a pair of virtual cameras reproducing binocular vision; and
   - carry out, on the screen, a right-eye and left-eye display of the obtained mixed-reality stereoscopic image.

2. Simulation sighting binoculars according to Claim 1, wherein the electronic circuitry is configured to:

   - further superimpose, in the virtual scene which is local to the simulation sighting binoculars, a reticle in a projection window E1 placed in a plane which is closer to the simulation sighting binoculars than the one where the projection window E2 is placed in the field of view of the simulation sighting binoculars, the line of sight also passing through the centre of the projection window E1, and, when a magnification factor is to be applied, adjust the dimensions of the projection window E1 according to the magnification factor.

3. Simulation sighting binoculars according to Claim 1 or 2, wherein the electronic circuitry is configured to:

   - further superimpose, in the virtual scene which is local to the simulation sighting binoculars, additional information in a projection window E0 placed in a plane which is closer to the simulation sighting binoculars than the one where the projection window E1 is placed in the field of view of the simulation sighting binoculars, the projection window E0 not being sensitive to the magnification factor.

4. Simulation sighting binoculars according to any one of Claims 1 to 3, wherein the screen, the camera and the electronic circuitry are provided by a smart mobile telephone joined to a housing comprising the pair of lenses, which are arranged to face the screen of the smart mobile telephone.

5. Simulation sighting binoculars according to any one of Claims 1 to 4, further comprising a sensor of inertial measurement unit type, and wherein the electronic circuitry implements a Simultaneous Localization and Mapping, SLAM, algorithm, and the orientation information for the camera is provided by the Simultaneous Localization and Mapping, SLAM, algorithm, except when the Simultaneous Localization and Mapping, SLAM, algorithm stalls, in which case the orientation information for the camera is provided by the sensor of inertial measurement unit type.

6. Simulation sighting binoculars according to Claim 5, wherein the geolocation information for the simulation sighting binoculars is provided by the Simultaneous Localization and Mapping, SLAM, algorithm, except when the Simultaneous Localization and Mapping, SLAM, algorithm stalls, in which case the geolocation information for the simulation sighting binoculars is provided by a GPS receiver integrated into the simulation sighting binoculars.

7. Simulation sighting binoculars according to Claim 5 or 6, wherein the Simultaneous Localization and Mapping, SLAM, algorithm provides a confidence index associated with the orientation information for the camera, for each video frame captured by the camera, and the electronic circuitry is configured to determine whether the Simultaneous Localization and Mapping, SLAM, algorithm has stalled according to the value of the confidence index.

8. Simulation sighting binoculars according to Claim 5 or 6, wherein, when the Simultaneous Localization and Mapping, SLAM, algorithm has stalled, the electronic circuitry corrects the updated orientation information from the sensor of inertial measurement unit, IMU, type in the following way:

$$Q_{abs}(t) = Q_{abs}(t0) * Q_{imu}^{-1}(t0) * Q_{imu}(t)$$

where:

- $Q_{abs}(t)$ represents the corrected orientation information;
- $Q_{abs}(t0)$ represents the absolute orientation information, that is to say that originating from the SLAM algorithm, before stalling;
- $Q_{imu}(t)$ represents the updated orientation information from the sensor of inertial measurement unit, IMU, type; and
- $Q_{imu}(t0)$ represents the orientation information from the sensor of inertial measurement unit, IMU, type before stalling of the SLAM algorithm.

9. Simulation sighting binoculars according to any one of Claims 5 to 8, wherein the electronic circuitry corrects the orientation information provided by the Simultaneous Localization and Mapping, SLAM, algorithm according to deviations determined during calibration operations.

10. Simulation sighting binoculars according to Claim 9, wherein the electronic circuitry is configured to, during the calibration operations:

- receive simulation graphical elements corresponding to a calibration virtual object and spatial positioning information for the calibration virtual object;
- carry out, on the screen, a right-eye and left-eye stereoscopic display of a mixed-reality stereoscopic image including the calibration virtual object;
- obtain first orientation information for the camera when a first press on a calibration button of the simulation sighting binoculars is carried out;
- obtain second orientation information for the camera when a second press on the calibration button of the simulation sighting binoculars is carried out; and
- compare the first orientation information and the second orientation information and deduce therefrom corresponding orientation and altitude information deviations.

11. Simulation system comprising a simulation platform, as well as simulation sighting binoculars according to any one of Claims 1 to 10, the simulation platform comprising electronic circuitry configured to place, according to a training scenario, virtual objects in a digital terrain model modelling a training ground where the simulation sighting binoculars are intended to be used, and to transmit or cause to be transmitted, to the simulation sighting binoculars, the simulation graphical elements according to the geolocation information for the simulation sighting binoculars and the orientation information for the camera which is transmitted by the simulation sighting binoculars.

12. Simulation system according to Claim 11, wherein the simulation platform transmits or causes to be transmitted, to the simulation sighting binoculars, the simulation graphical elements asynchronously with respect to the geolocation information for the simulation sighting binoculars and to the orientation information for the camera, the simulation sighting binoculars carry out interpolations of the positioning of the virtual objects and a first processing unit of the simulation system, which is remote from the simulation sighting binoculars, carries out, on behalf of the simulation sighting binoculars, a positioning adjustment by virtue of the digital terrain model.

13. Simulation system according to Claim 11 or 12, wherein, when the simulation sighting binoculars activate a telemetry reading, a second processing unit of the simulation system, which is remote from the simulation sighting binoculars, carries out a distance calculation with respect to a target sighted by the simulation sighting binoculars using a ray tracing method in a virtual scene including said virtual objects and the digital terrain model.

14. Simulation method, implemented by electronic circuitry of simulation sighting binoculars further comprising a camera, a screen and a pair of lenses which are arranged to face the screen, the method comprising the following steps:

- obtaining a video frame from the camera, the video frame being intended to be displayed by the simulation sighting binoculars in a projection window E3;

- obtaining geolocation information for the simulation sighting binoculars and orientation information for the camera;

- transmitting the geolocation and orientation information to a simulation platform;

- receiving simulation graphical elements and spatial positioning information for three-dimensional virtual objects corresponding to the simulation graphical elements;

- carrying out a two-dimensional rendering of the virtual objects depending on the positioning information, in order to display the virtual objects in a projection window E2, and, when a magnification factor is to be applied, keeping the dimensions of the projection window E2 fixed and adjusting the field of view of the two-dimensional rendering according to the magnification factor;

- superimposing, in a virtual scene which is local to the simulation sighting binoculars, the two-dimensional rendering of the virtual objects in the projection window E2 and the video frames in the projection window E3, the projection window E3 being placed in a plane which is farther from the simulation sighting binoculars than the one where the projection window E2 is placed in the field of view of the simulation sighting binoculars, the simulation sighting binoculars having a line of sight which passes through the centre of the projection windows E2 and E3, and, when the magnification factor is to be applied, adjusting the dimensions of the projection window E3 according to the magnification factor;

- obtaining a mixed-reality stereoscopic image from superimposing the planes using a pair of virtual cameras reproducing binocular vision which is adapted to the pair of lenses; and

- carrying out, on the screen, a right-eye and left-eye display of the obtained mixed-reality stereoscopic image.

15. Simulation method, implemented by a simulation system including simulation sighting binoculars implementing the simulation method according to Claim 14 and a simulation platform comprising electronic circuitry, implementing the following steps:

- placing, according to a training scenario, virtual objects in a three-dimensional digital terrain model modelling a training ground where the simulation sighting binoculars are used; and

- transmitting or causing to be transmitted, to the simulation sighting binoculars, graphical elements corresponding to the virtual objects according to the geolocation information for the simulation sighting binoculars and the orientation information for their camera which is transmitted by the simulation sighting binoculars.

16. Computer program product, comprising instructions causing simulation sighting binoculars according to Claim 1 to execute the method according to Claim 14 when said instructions are executed by a processor.

Fig. 1

Fig. 2A

Fig. 2B

Fig. 2C

Fig. 2D

Fig. 3

| Calibration | 401 |

↓

| Obtention d'une trame vidéo de capture | 402 |

↓

| Obtention d'informations de position et d'informations d'orientation | 403 |

↓

| Obtention d'éléments graphiques de simulation | 404 |

↓

| Obtention d'un rendu en 2D de la scène virtuelle, en fonction éventuellement d'un facteur de grossissement | 405 |

↓

| Redéfinition éventuelle des dimensions de fenêtres de projection de la trame vidéo de capture, et d'un réticule, en fonction du facteur de grossissement | 406 |

↓

| Superposition du rendu en 2D de la scène virtuelle et de la trame vidéo de capture et éventuellement du réticule | 407 |

↓

| Insertion éventuelle d'informations complémentaires (télémétrie, azimuth...) | 408 |

↓

| Obtention d'une image stéréoscopique œil droit/œil gauche | 409 |

↓

| Affichage œil droit / œil gauche | 410 |

Fig. 4

Suivi d'algorithme SLAM ~ 501

Oui — Décrochage? — Non
502

Obtention, au moins, d'informations d'orientation de l'algorithme SLAM ~ 503

Correction, au moins, des informations d'orientation de l'algorithme SLAM ~ 504

Récupération, au moins, des informations d'orientation l'algorithme SLAM avant décrochage ~ 505

Récupération d'informations d'orientation IMU avant décrochage ~ 506

Obtention d'informations d'orientation IMU actualisées ~ 507

Correction des informations d'orientation IMU ~ 508

Fig. 5

Fig. 6

Fig. 7

Fig. 8A

Fig. 8B

**EP 4 252 417 B1**

**Documents brevets cités dans la description**

- FR 3007161 A1
- US 2013050432 A1
- ES 2300204 B1